# EUROPEAN PATENT SPECIFICATION

(11) **EP 3 441 418 B1**
(45) Date of publication and mention of the grant of the patent: **25.03.2020**
(21) Application number: 18187913.1
(22) Date of filing: 08.08.2018
(51) Int. Cl.: C08G 73/10, C08G 73/14, C08L 79/08

(54) **POLY(AMIDE-IMIDE) COPOLYMER, COMPOSITION FOR PREPARING POLY(AMIDE-IMIDE) COPOLYMER, ARTICLE INCLUDING POLY(AMIDE-IMIDE) COPOLYMER, AND DISPLAY DEVICE INCLUDING THE ARTICLE**
POLY(AMID-IMID)COPOLYMER, ZUSAMMENSETZUNG ZUR HERSTELLUNG VON POLY(AMID-IMID)COPOLYMER, GEGENSTAND MIT POLY(AMID-IMID)COPOLYMER UND ANZEIGEVORRICHTUNG MIT DIESEM GEGENSTAND
COPOLYMÈRE POLY(AMIDE-IMIDE), COMPOSITION POUR LA PRÉPARATION DE COPOLYMÈRE POLY(AMIDE-IMIDE), ARTICLE CONTENANT UN COPOLYMÈRE POLY(AMIDE-IMIDE) ET DISPOSITIF ÉLECTRONIQUE COMPRENANT L'ARTICLE

(30) Priority: 09.08.2017 KR 20170101224
(43) Date of publication of application: 13.02.2019
(73) Proprietor: Samsung Electronics Co., Ltd., Gyeonggi-do 16677 (KR); Samsung SDI Co., Ltd., Gyeonggi-do (KR)
(72) Inventor: CHAE, Jungha, Gyeonggi-do, (KR); JU, Kyeong-sik, Gyeonggi-do, (KR)
(74) Representative: Elkington and Fife LLP

(56) References cited:
- EP-A1- 3 088 440
- EP-A1- 3 156 436
- US-A1- 2010 216 899
- US-A1- 2013 327 714
- US-A1- 2015 057 426

## Description

### FIELD OF THE INVENTION

This disclosure relates to a poly(amide-imide) copolymer, a composition for preparing a poly(amide-imide) copolymer, an article including a poly(amide-imide) copolymer, and to a display device including the article.

### BACKGROUND OF THE INVENTION

A flexible display, which is not restricted by time and place, that is thin and flexible like paper, ultra light, and consumes a small amount of electricity, has been increasingly in demand as a display for visualizing various information and delivering it to the users. The flexible display may be realized by using a flexible substrate, organic and inorganic materials for a low temperature process, flexible electronics, encapsulation, packaging, and the like.

A transparent plastic film for replacing a conventional window cover glass to be used in a flexible display must have high toughness and excellent optical properties. Desired optical properties include high light transmittance, low haze, low yellowness index, low YI difference after exposure to UV light, and the like.

There still remains a need for polymers having excellent optical and mechanical properties that could be used in transparent plastic films.

### SUMMARY OF THE INVENTION

An embodiment provides a poly(amide-imide) copolymer having improved optical and mechanical properties.

Another embodiment provides a composition for preparing a poly(amide-imide) copolymer.

Still another embodiment provides an article including a poly(amide-imide) copolymer.

Yet another embodiment provides a display device comprising an article including the poly(amide-imide) copolymer.

According to an embodiment, provided is a poly(amide-imide) copolymer that is a reaction product of a diamine represented by Chemical Formula 1, a diamine represented by Chemical Formula 2, a dicarbonyl compound represented by Chemical Formula 3, and a tetracarboxylic acid dianhydride represented by Chemical Formula 4: 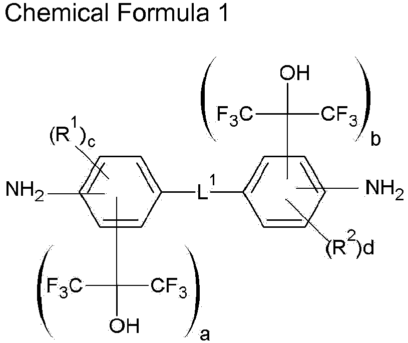 wherein in Chemical Formula 1,
R¹ and R² are each independently a halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-,-Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2;

Chemical Formula 2 NH₂-A-NH₂

wherein in Chemical Formula 2,
A is a ring system including two or more C6 to C30 aromatic rings linked by a single bond, wherein each of the two or more of the aromatic rings is independently unsubstituted or substituted by an electron-withdrawing group; 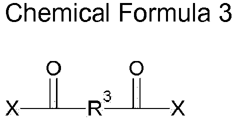 wherein, in Chemical Formula 3,
R³ is a substituted or unsubstituted phenylene or biphenylene group, and each X is an identical or a different halogen atom, 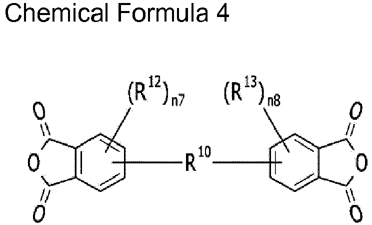 wherein, in Chemical Formula 4,
R¹⁰ is a single bond, -O-, -S-, -C(=O)-, -CH(OH)-, -C(=O)NH-, -S(=O)₂-,-Si(CH₃)₂-, -(CH₂)ₚ-, -(CF₂)_{q}- , -C(CₙH₂ₙ₊₁)₂-, -C(CₙF₂ₙ₊₁)₂-, -(CH₂)ₚC(CₙH₂ₙ₊₁)₂(CH₂)_{q}-, or-(CH₂)ₚC(CₙF₂ₙ₊₁)₂(CH₂)_{q}- wherein 1≤n≤10, 1≤p≤10, and 1≤q≤10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group,
n7 and n8 are each independently an integer ranging from 0 to 3.

In Chemical Formula 1, L¹ may be a C1 to C20 alkylene group, R¹ and R² may each independently be F or CI, each a and b may be 1, c and d may each independently be an integer ranging from 0 to 2.

In Chemical Formula 1, L¹ may be methylene group, each a and b may be 1, and each c and d may be 0.

The diamine represented by Chemical Formula 2 may have a ring system including two C6 to C12 aromatic rings linked by a single bond, wherein each of the two C6 to C12 aromatic rings may be substituted by an electron-withdrawing group selected from a halogen atom, a nitro group, a cyano group, a C1 or C2 haloalkyl group, a C2 to C6 alkanoyl group, or a C1 to C6 ester group.

The diamine represented by Chemical Formula 2 may include at least one selected from the diamines represented by the chemical formulae:

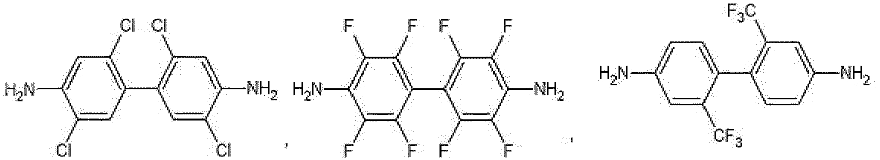

The diamine represented by Chemical Formula 2 may include the diamines represented by Chemical Formula A:

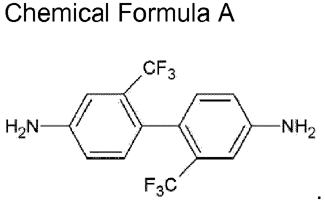

In Chemical Formula 3, R³ may be a phenylene group, and each X may be independently CI or Br.

The tetracarboxylic acid dianhydride represented by Chemical Formula 4 may include at least one selected from 3,3',4,4'-biphenyl tetracarboxylic dianhydride (BPDA), 3,3',4,4'-diphenylsulfone tetracarboxylic dianhydride (DSDA), 4,4'-(hexafluoroisopropylidene)diphthalic anhydride (6FDA), and 4,4'-oxydiphthalic anhydride (ODPA).

The tetracarboxylic acid dianhydride represented by Chemical Formula 4 may include a combination of 3,3',4,4'-biphenyl tetracarboxylic dianhydride (BPDA) and 4,4'-(hexafluoroisopropylidene)diphthalic anhydride (6FDA).

An amount of the diamine represented by Chemical Formula 1 may be less than 50 mole percent based on the total amount of the diamine represented by Chemical Formula 1 and the diamine represented by Chemical Formula 2.

A mole ratio of the dicarbonyl compound represented by Chemical Formula 3 and the tetracarboxylic acid dianhydride represented by Chemical Formula 4 may be 30 to 70: 70 to 30.

The total amount of the diamine represented by Chemical Formula 2 and the dicarbonyl compound represented by Chemical Formula 3 may be equal to or greater than 50 mole percent based on the total amount of the compounds represented by Chemical Formulae 1 to 4.

According to an embodiment, provided is a composition for preparing a poly(amide-imide) copolymer including a diamine represented by Chemical Formula 5, a diamine represented by Chemical Formula 1, and a tetracarboxylic acid dianhydride represented by Chemical Formula 4: 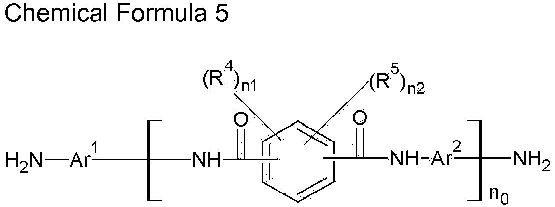 wherein, in Chemical Formula 5,
R⁴ and R⁵ are each independently a halogen, a hydroxy group, a substituted or unsubstituted C1 to C10 alkyl group, or a substituted or unsubstituted C1 to C10 alkoxy group,
n0 is an integer greater than or equal to 0,
n1 and n2 are each independently an integer ranging from 0 to 4, provided that n1+n2 is an integer ranging from 0 to 4, and
Ar¹ and Ar² are each independently represented by Chemical Formula 6: 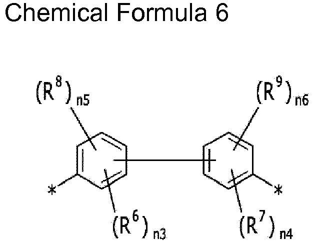
wherein, in Chemical Formula 6,
R⁶ and R⁷ are each independently an electron withdrawing group selected from-CF₃, -CCl₃, -CBr₃, -Cl₃, -NO₂, -CN, -C(=O)CH₃, and -CO₂C₂H₅,
R⁸ and R⁹ are each independently a halogen, a hydroxy group, a substituted or unsubstituted C1 to C10 aliphatic organic group, a C6 to C20 aromatic organic group, an alkoxy group of formula -OR²⁰⁴, wherein R²⁰⁴ is a C1 to C10 aliphatic organic group, or a silyl group of formula -SiR²⁰⁵R²⁰⁶R²⁰⁷ wherein R²⁰⁵, R²⁰⁶, and R²⁰⁷ are each independently hydrogen or a C1 to C10 aliphatic organic group,
n3 is an integer ranging from 1 to 4, n5 is an integer ranging from 0 to 3, provided that n3 + n5 is an integer ranging from 1 to 4, and
n4 is an integer ranging from 1 to 4, n6 is an integer ranging from 0 to 3, provided that n4 + n6 is an integer ranging from 1 to 4; 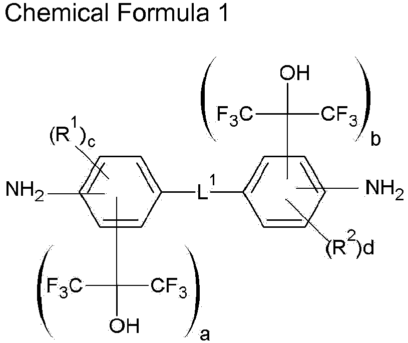
wherein in Chemical Formula 1,
R¹ and R² are each independently an halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-,-Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2; 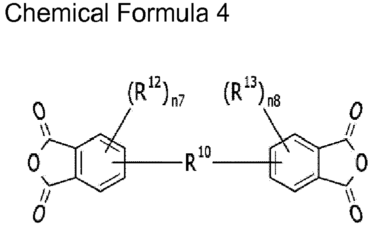
wherein, in Chemical Formula 4,
R¹⁰ is a single bond, -O-, -S-, -C(=O)-, -CH(OH)-, -C(=O)NH-, -S(=O)₂-,-Si(CH₃)₂-, -(CH₂)ₚ-, -(CF₂)_{q}-, -C(CₙH₂ₙ₊₁)₂-, -C(CₙF₂ₙ₊₁)₂-, -(CH₂)ₚC(CₙH₂ₙ₊₁)₂(CH₂)_{q}-, or-(CH₂)ₚC(CₙF₂ₙ₊₁)₂(CH₂)_{q}- wherein 1≤n≤10, 1≤p≤10, and 1≤q≤10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group, and
n7 and n8 are each independently an integer ranging from 0 to 3.

The composition may further include a diamine represented by Chemical Formula 2:

Chemical Formula 2 NH₂-A-NH₂

wherein in Chemical Formula 2,
A is a ring system including two or more C6 to C30 aromatic rings linked by a single bond, wherein each of the two or more of the aromatic rings is independently unsubstituted or substituted by an electron-withdrawing group;

In Chemical Formula 1, L¹ may be a C1 to C20 alkylene group, R¹ and R² may each independently be F or CI, each a and b may be 1, c and d may each independently be an integer ranging from 0 to 2.

The tetracarboxylic acid dianhydride represented by Chemical Formula 4 may be a combination of the compound represented by Chemical Formula 4-1 and the compound represented by Chemical Formula 4-2.

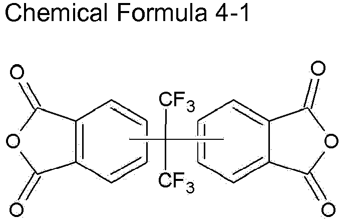

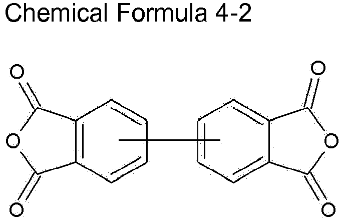

Both n1 and n2 in Chemical Formula 5 may be 0 (zero), and in Chemical Formula 6, both R⁶ and R⁷ may be -CF₃, both n3 and n4 may be 1, and both n5 and n6 may be 0 (zero).

According to another embodiment, provided is an article including a poly(amideimide) copolymer according to an embodiment.

The article may be a film, wherein the film may have a toughness of greater than or equal to 1,000 Joules × reverse cubic meters × 10⁴ (Joul·m⁻³10⁴), and a refractive index of less than or equal to 1.68, when the film has a thickness of about 35 micrometers to about 100 micrometers.

According to another embodiment, provided is a display device including an article according to an embodiment.

Hereinafter, further embodiments will be described in detail.

### DETAILED DESCRIPTION OF THE EMBODIMENTS

This disclosure will be described more fully hereinafter with reference to the accompanying drawings, in which embodiments are shown. This disclosure may, however, be embodied in many different forms and is not to be construed as limited to the exemplary embodiments set forth herein.

It will be understood that when an element is referred to as being "on" another element, it may be directly on the other element or intervening elements may be present therebetween. In contrast, when an element is referred to as being "directly on" another element, there are no intervening elements present.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another element, component, region, layer, or section. Thus, a first element, component, region, layer, or section discussed below could be termed a second element, component, region, layer, or section without departing from the teachings of the present embodiments.

The terminology used herein is for the purpose of describing particular embodiments only and is not intended to be limiting. As used herein, the singular forms "a," "an" and "the" are intended to include the plural forms as well, unless the context clearly indicates otherwise. The term "or" means "and/or." As used herein, the term "and/or" includes any and all combinations of one or more of the associated listed items. Expressions such as "at least one of," when preceding a list of elements, modify the entire list of elements and do not modify the individual elements of the list.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) as used herein have the same meaning as commonly understood by one of ordinary skill in the art to which this general inventive concept belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

"About" or "approximately" as used herein is inclusive of the stated value and means within an acceptable range of deviation for the particular value as determined by one of ordinary skill in the art, considering the measurement in question and the error associated with measurement of the particular quantity (*i.e.,* the limitations of the measurement system).

"Mixture" as used herein is inclusive of all types of combinations, including blends, alloys, solutions, and the like.

As used herein, when a specific definition is not otherwise provided, the term "substituted" refers to a group or compound substituted with at least one substituent including a halogen (-F, -Br, -CI, or -I), a hydroxy group, a nitro group, a cyano group, an amino group (-NH₂, -NH(R¹⁰⁰) or -N(R¹⁰¹)(R¹⁰²), wherein R¹⁰⁰, R¹⁰¹, and R¹⁰² are the same or different, and are each independently a C1 to C10 alkyl group), an amidino group, a hydrazine group, a hydrazone group, a carboxyl group, an ester group, a ketone group, a substituted or unsubstituted alkyl group, a substituted or unsubstituted alicyclic organic group, a substituted or unsubstituted aryl group, a substituted or unsubstituted alkenyl group, a substituted or unsubstituted alkynyl group, a substituted or unsubstituted heteroaryl group, and a substituted or unsubstituted heterocyclic group, in place of at least one hydrogen of a functional group, or the substituents may be linked to each other to provide a ring.

As used herein, the term "alkyl group" refers to a straight or branched chain saturated aliphatic hydrocarbon group having the specified number of carbon atoms and having a valence of at least one. Non-limiting examples of the alkyl group are methyl, ethyl, and propyl.

As used herein, the term "alkoxy group" refers to "alkyl-O-", wherein the term "alkyl" has the same meaning as described above. Non-limiting examples of the alkoxy group are methoxy, ethoxy, and propoxy.

As used herein, the term "aryl group", which is used alone or in combination, refers to an aromatic hydrocarbon group containing at least one ring. Non-limiting examples of the aryl group are phenyl, naphthyl, and tetrahydronaphthyl.

As used herein, when a specific definition is not otherwise provided, the term "alkyl group" refers to a C1 to C30 alkyl group, for example, a C1 to C15 alkyl group, the term "cycloalkyl group" refers to a C3 to C30 cycloalkyl group, for example, a C3 to C18 cycloalkyl group, the term "alkoxy group" refer to a C1 to C30 alkoxy group, for example, a C1 to C18 alkoxy group, the term "ester group" refers to a C2 to C30 ester group, for example, a C2 to C18 ester group, the term "ketone group" refers to a C2 to C30 ketone group, for example, a C2 to C18 ketone group, the term "aryl group" refers to a C6 to C30 aryl group, for example, a C6 to C18 aryl group, the term "alkenyl group" refers to a C2 to C30 alkenyl group, for example, a C2 to C18 alkenyl group, the term "alkynyl group" refers to a C2 to C30 alkynyl group, for example, a C2 to C18 alkynyl group, the term "alkylene group" refers to a C1 to C30 alkylene group, for example, a C1 to C18 alkylene group, and the term "arylene group" refers to a C6 to C30 arylene group, for example, a C6 to C16 arylene group.

As used herein, when a specific definition is not otherwise provided, the term "aliphatic organic group" refers to a C1 to C30 alkyl group, a C2 to C30 alkenyl group, a C2 to C30 alkynyl group, a C1 to C30 alkylene group, a C2 to C30 alkenylene group, or a C2 to C30 alkynylene group, for example, a C1 to C15 alkyl group, a C2 to C15 alkenyl group, a C2 to C15 alkynyl group, a C1 to C15 alkylene group, a C2 to C15 alkenylene group, or a C2 to C15 alkynylene group, the term "alicyclic organic group" refers to a C3 to C30 cycloalkyl group, a C3 to C30 cycloalkenyl group, a C3 to C30 cycloalkynyl group, a C3 to C30 cycloalkylene group, a C3 to C30 cycloalkenylene group, or a C3 to C30 cycloalkynylene group, for example, a C3 to C15 cycloalkyl group, a C3 to C15 cycloalkenyl group, a C3 to C15 cycloalkynyl group, a C3 to C15 cycloalkylene group, a C3 to C15 cycloalkenylene group, or a C3 to C15 cycloalkynylene group.

As used herein when a definition is not otherwise provided, the term "aromatic organic group" refers to a C6 to C30 group including one aromatic ring, two or more aromatic rings fused together to provide a condensed ring system, or two or more moieties independently selected from the foregoing (a single aromatic ring or a condensed ring system) linked through a single bond or through a functional group selected from a fluorenylene group, -O-, -S-, -C(=O)-, -CH(OH)-, -S(=O)₂-, -Si(CH₃)₂-,-(CH₂)ₚ-, wherein 1≤p≤10, -(CF₂)_{q}-, wherein 1≤q≤10, -C(CH₃)₂-, -C(CF₃)₂-, and-C(=O)NH-, for example, through -S(=O)₂-, for example a C6 to C30 aryl group or a C6 to C30 arylene group, for example, a C6 to C16 aryl group or a C6 to C16 arylene group such as phenylene. An example of an aromatic organic group is a fluorenylene group.

As used herein, when a specific definition is not otherwise provided, the term "heterocyclic group" refers to a C2 to C30 heterocycloalkyl group, a C2 to C30 heterocycloalkylene group, a C2 to C30 heterocycloalkenyl group, a C2 to C30 heterocycloalkenylene group, a C2 to C30 heterocycloalkynyl group, a C2 to C30 heterocycloalkynylene group, a C2 to C30 heteroaryl group, or a C2 to C30 heteroarylene group including 1 to 3 heteroatoms selected from O, S, N, P, Si, and a combination thereof in one ring, for example, a C2 to C15 heterocycloalkyl group, a C2 to C15 heterocycloalkylene group, a C2 to C15 heterocycloalkenyl group, a C2 to C15 heterocycloalkenylene group, a C2 to C15 heterocycloalkynyl group, a C2 to C15 heterocycloalkynylene group, a C2 to C15 heteroaryl group, or a C2 to C15 heteroarylene group including 1 to 3 heteroatoms selected from O, S, N, P, Si, and a combination thereof, in one ring.

When a group containing a specified number of carbon atoms is substituted with any of the groups listed in the preceding paragraph, the number of carbon atoms in the resulting "substituted" group is defined as the sum of the carbon atoms contained in the original (unsubstituted) group and the carbon atoms (if any) contained in the substituent. For example, when the term "substituted C1 to C30 alkyl" refers to a C1 to C30 alkyl group substituted with C6 to C30 aryl group, the total number of carbon atoms in the resulting aryl substituted alkyl group is C7 to C60.

As used herein, when a definition is not otherwise provided, "combination" commonly refers to mixing or copolymerization.

As used herein, when a definition is not otherwise provided, "polyimide" may refer to not only "polyimide", but also "polyamic acid" or a combination of "polyimide" and "polyamic acid". Further, the terms "polyimide" and "polyamic acid" may be understood as the same material.

In addition, in the specification, the mark " * " may refer to a point of attachment to another atom.

Research efforts towards converting mobile devices, such as, a mobile phone or a tablet personal computer, and the like, to light, flexible, and bendable devices are currently ongoing. In this regard, a flexible and transparent window film for a display device having high hardness for replacing a rigid glass placed on top of the mobile devices is desired.

To be used as a window film, good optical and mechanical properties are desired. Desired optical properties include high light transmittance, low yellowness index (YI), low YI difference after exposure to UV light, low haze, low refractive index (low reflection index), and the like. Mechanical properties, such as hardness, may be supplemented with a hard coating layer, but a base film having high toughness may ensure that a final film has high mechanical properties.

A polyimide or poly(amide-imide) copolymer has excellent mechanical, thermal, and optical properties, and thus is widely used as a plastic substrate for a display device, such as an organic light emitting diode (OLED), liquid crystal display (LCD), and the like. In order to use polyimide or poly(amide-imide) film as a window film for a flexible display device, however, further improved mechanical and optical properties, such as, high hardness (or modulus), toughness, high light transmittance, low yellowness index, low refractive index, and the like, are desired. It is difficult, however, to improve both mechanical and optical properties of the film at the same time, as the two properties, especially, tensile modulus and yellowness index of a polyimide or poly(amide-imide) film are in a trade-off relationship with regard to each other.

Meanwhile, in an effort to improve mechanical properties of a poly(amide-imide) copolymer film, researches prepared a poly(amide-imide) copolymer by increasing the amount of an amide structural unit, or by including a dianhydride having a more rigid structure. In this case, however, tensile modulus is hardly improved, while optical properties, such as YI, are deteriorated. Otherwise, refractive index of a film may increase to increase reflection index, or toughness may reduce.

The inventors of the subject matter of the present application have developed a poly(amide-imide) copolymer having good optical properties, such as, for example, low refractive index, as well as improved toughness, and a composition for preparing the poly(amide-imide). As a result, they have found a new composition for preparing a poly(amide-imide) copolymer including an aromatic tetracarboxylic dianhydride, an aromatic diamine, and an aromatic dicarbonyl compound, wherein the aromatic diamine includes a first diamine having two aromatic rings linked by a flexible linking group, whereby renders the poly(amide-imide) copolymer having improved flexibility, and having a functional group including a fluorine group, whereby renders the poly(amideimide) copolymer having a low refractive index, and a second diamine having two or more aromatic rings, wherein the two or more aromatic rings are linked by a single group, whereby renders the poly(amide-imide) copolymer maintaining its mechanical properties, and have confirmed that the poly(amide-imide) copolymer prepared from the composition may have improved mechanical properties and toughness, as well as excellent optical properties. For example, when the prepared poly(amide-imide) copolymer is fabricated into a film having a thickness of about 50 micrometers (µm), the film may have a toughness of greater than or equal to 1,000 Joules × reverse cubic meters × 10⁴ (Joul·m^{-3·}10⁴), a light transmittance of greater than or equal to 89% in a wavelength range of 350 nanometers (nm) to 750 nm, a yellowness index of less than or equal to 2.2, a YI difference (ΔYI) after UVB exposure for 72 hours of less than or equal to 1.0, and a refractive index of less than or equal to 1.68.

Accordingly, an embodiment provides a poly(amide-imide) copolymer that is a reaction product of a diamine represented by Chemical Formula 1, a diamine represented by Chemical Formula 2, a dicarbonyl compound represented by Chemical Formula 3, and a tetracarboxylic acid dianhydride represented by Chemical Formula 4: 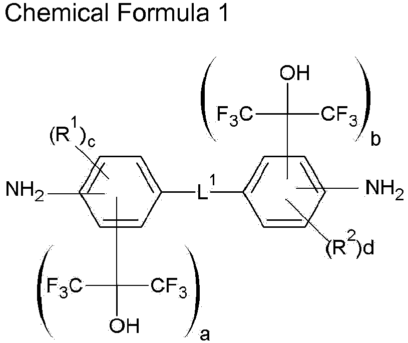 wherein in Chemical Formula 1,
R¹ and R² are each independently an halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-, - Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2;

Chemical Formula 2 NH₂-A-NH₂

wherein in Chemical Formula 2,
A is a ring system including two or more C6 to C30 aromatic rings linked by a single bond, wherein each of the two or more of the aromatic rings is independently unsubstituted or substituted by an electron-withdrawing group; 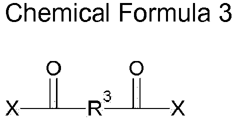 wherein, in Chemical Formula 3,
R³ is a substituted or unsubstituted phenylene or biphenylene group, and each X is an identical or a different halogen atom. 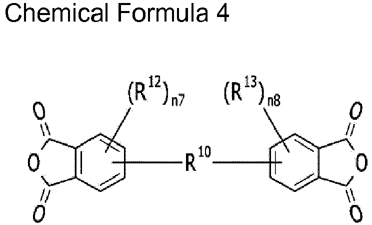 wherein, in Chemical Formula 4,
R¹⁰ is a single bond, -O-, -S-, -C(=O)-, -CH(OH)-, -C(=O)NH-, -S(=O)₂-,-Si(CH₃)₂-, -(CH₂)ₚ-, -(CF₂)_{q}-, -C(CₙH₂ₙ₊₁)₂-, -C(CₙF₂ₙ₊₁)₂-, -(CH₂)ₚC(CₙH₂ₙ₊₁)₂(CH₂)_{q}-, or-(CH₂)ₚC(CₙF₂ₙ₊₁)₂(CH₂)_{q}- wherein 1≤n≤10, 1≤p≤10, and 1≤q≤10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group,
n7 and n8 are each independently an integer ranging from 0 to 3.

In Chemical Formula 1, L¹ may be a C1 to C20 alkylene group, for example, a C1 to C10 alkylene group, for example, a C1 to C5 alkylene group, for example, methylene group, ethylene group, propylene group, butylene group, or pentylene group, and for example, L¹ may be a methylene group.

In Chemical Formula 1, R¹ and R² may each independently be F or CI, and in an exemplary embodiment, both R¹ and R² may be F.

In an exemplary embodiment, both a and b may be 1, and each of c and d may independently be an integer ranging from 0 to 2.

In an exemplary embodiment, both a and b may be 1, and both c and d may be 0 (zero).

The diamine represented by Chemical Formula 2 may have a ring system including two C6 to C12 aromatic rings linked by a single bond, wherein each of the two C6 to C12 aromatic rings may independently be substituted by an electron-withdrawing group selected from an halogen atom, a nitro group, a cyano group, a C1 or C2 haloalkyl group, a C2 to C6 alkanoyl group, or a C1 to C6 ester group.

In an exemplary embodiment, the electron-withdrawing group substituted to each of the aromatic rings of the diamine represented by Chemical Formula 2 may be selected from an halogen atom, , -CF₃, -CCl₃, -CBr₃, or -Cl₃.

The diamine represented by Chemical Formula 2 may include at least one selected from the diamines represented by the following chemical formulae:

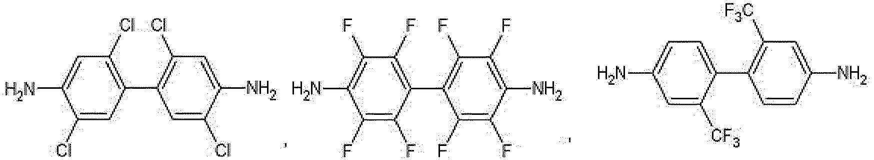

The diamine represented by Chemical Formula 2 may include a diamine represented by Chemical Formula A, i.e., 2,2'-bis(trifluoromethyl)benzidine (TFDB):

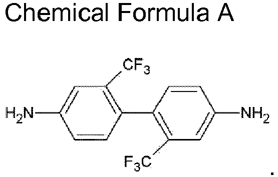

In Chemical Formula 3, R³ may be a phenylene group, and each X may be independently CI or Br.

In an exemplary embodiment, the dicarbonyl compound represented by Chemical Formula 3 may be terephthaloyl dichloride (TPCI).

The tetracarboxylic acid dianhydride represented by Chemical Formula 4 may include at least one selected from 3,3',4,4'-biphenyl tetracarboxylic dianhydride (BPDA), 3,3',4,4'-diphenylsulfone tetracarboxylic dianhydride (DSDA), 4,4'-(hexafluoroisopropylidene)diphthalic anhydride (6FDA), and 4,4'-oxydiphthalic anhydride (ODPA), and is not limited thereto.

In an exemplary embodiment, the tetracarboxylic acid dianhydride represented by Chemical Formula 4 may be a combination of the compound represented by Chemical Formula 4 wherein R¹⁰ is a single bond, and both n7 and n8 are 0, that is, 3,3',4,4'-biphenyl tetracarboxylic dianhydride (BPDA), and the compound represented by Chemical Formula 4 wherein R¹⁰ is -C(CₙF₂ₙ₊₁)₂- wherein 1≤n≤10, and both n7 and n8 are 0, that is, 4,4'-(hexafluoroisopropylidene)diphthalic anhydride (6FDA).

At least one of the diamine represented by Chemical Formula 1 and the diamine represented by Chemical Formula 2 may react with a dicarbonyl compound represented by Chemical Formula 3 to provide an amide structural unit in a poly(amide-imide) copolymer, and at least one of the diamine represented by Chemical Formula 1 and the diamine represented by Chemical Formula 2 may react with a tetracarboxylic acid dianhydride represented by Chemical Formula 4 to provide an imide structural unit in a poly(amide-imide) copolymer.

A conventional method for preparing a poly(amide-imide) copolymer may include preparing an amide structural unit by reacting a dicarbonyl compound represented by Chemical Formula 3, such as, for example, a dicarbonyl chloride, with at least one diamine represented by Chemical Formula 1 or Chemical Formula 2, and further adding and reacting an additional diamine, such as, for example, a diamine represented by Chemical Formula 1 or Chemical Formula 2 with a tetracarboxylic acid dianhydride, for example, a tetracarboxylic acid dianhydride represented by Chemical Formula 4 to prepare an amic acid structural unit with the diamine and the tetracarboxylic acid dianhydride, as well as to link the prepared amide structural unit and the amic acid structural unit to provide a poly(amide-amic acid) copolymer. Thus prepared poly(amide-amic acid) copolymer may be partially or completely imidized by chemical and/or thermal imidization reaction. Then, the obtained poly(amide-amic acid and/or imide) copolymer may be precipitated, filtered, and/or further heat-treated to provide a final poly(amide-imide) copolymer. This method is well known to persons skilled in the art to which the invention pertains.

An amide structural unit prepared by reacting a diamine represented by Chemical Formula 1 and a dicarbonyl compound represented by Chemical Formula 3 may be represented by Chemical Formula 7, and an amide structural unit prepared by reacting a diamine represented by Chemical Formula 2 and a dicarbonyl compound represented by Chemical Formula 3 may be represented by Chemical Formula 8: 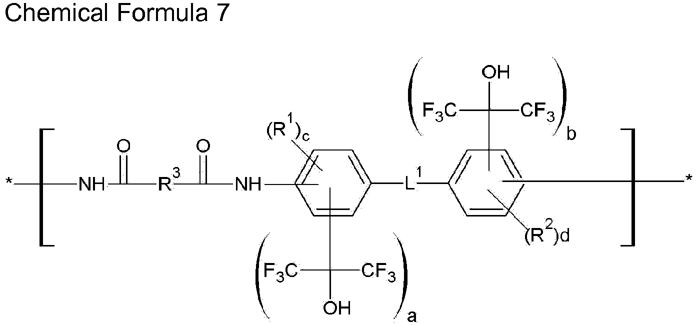 wherein in Chemical Formula 7,
R³ is the same as defined for Chemical Formula 3, and R¹ and R², L¹, and a to d are the same as defined for Chemical Formula 1, 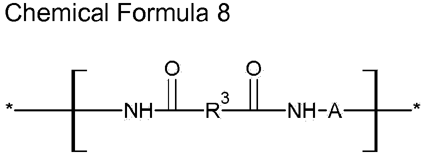 wherein in Chemical Formula 8,
R³ is the same as defined for Chemical Formula 3, and A is the same as defined for Chemical Formula 2.

Meanwhile, an imide structural unit prepared by reacting a diamine represented by Chemical Formula 1 and a tetracarboxylic acid dianhydride represented by Chemical Formula 4 may be represented by Chemical Formula 9, and an imide structural unit prepared by reacting a diamine represented by Chemical Formula 2 and a tetracarboxylic acid dianhydride represented by Chemical Formula 4 may be represented by Chemical Formula 8: 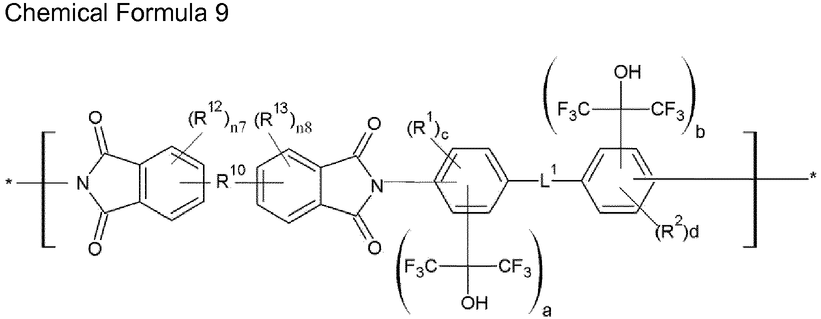 wherein in Chemical Formula 9,
each of R¹ and R², L¹, and a to d are the same as defined for Chemical Formula 1, and R¹⁰, R¹², R¹³, n7 and n8 are the same as defined for Chemical Formula 4: 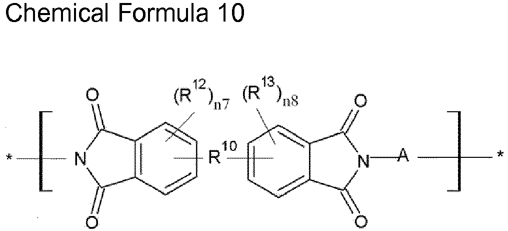 wherein in Chemical Formula 10,
A is the same as defined for Chemical Formula 2, and R¹⁰, R¹², R¹³, n7 and n8 are the same as defined for Chemical Formula 4.

Therefore, a poly(amide-imide) copolymer according to an embodiment may include an amide structural unit represented by at least one of Chemical Formula 7 and Chemical Formula 8, and an imide structural unit represented by at least one of Chemical Formula 9 and Chemical Formula 10, provided that the poly(amide-imide) copolymer is not consisting of an amide structural unit represented by Chemical Formula 7 and an imide structural unit represented by Chemical Formula 9, or of an amide structural unit represented by Chemical Formula 8 and an imide structural unit represented by Chemical Formula 10.

The diamine represented by Chemical Formula 1 may be included in an amount of less than 50 mole percent (mole%), for example, from about 1 mole% to about 49 mole%, for example, from about 5 mole% to about 45 mole%, for example, from about 5 mole% to about 40 mole%, based on the total amount of the diamines represented by Chemical Formula 1 and the diamine represented by Chemical Formula 2.

By including the diamine represented by Chemical Formula 1 and the diamine represented by Chemical Formula 2 in the above range and reacting them with a dicarbonyl compound represented by Chemical Formula 3 and a tetracarboxylic acid dianhydride represented by Chemical Formula 4, thus prepared poly(amide-imide) copolymer may have excellent optical properties, such as, for example, a low refractive index, for example, of less than or equal to about 1.68, as well as good mechanical properties, such as, for example, a toughness of greater than or equal to about 1,000 Joul·m^{-3·}10⁴.

If the diamine represented by Chemical Formula 1 is included in an amount of greater than or equal to 50 mole% based on the total amount of the diamines represented by Chemical Formula 1 and the diamine represented by Chemical Formula 2, the prepared poly(amide-imide) copolymer may have a deteriorated toughness of less than 1,000 Joul·m^{-3·}10⁴.

The dicarbonyl compound represented by Chemical Formula 3 and the tetracarboxylic acid dianhydride represented by Chemical Formula 4 may be included in a mole ratio of 30 to 70: 70 to 30, for example, 35 to 65: 65 to 35, for example, 40 to 60 : 60 to 40, for example, 50:50.

As described above, a dicarbonyl compound represented by Chemical Formula 3 may react with a diamine represented by Chemical Formula 1 and/or a diamine represented by Chemical Formula 2 to prepare an amide structural unit of a poly(amideimide) copolymer, while a tetracarboxylic acid dianhydride represented by Chemical Formula 4 may react with a diamine represented by Chemical Formula 1 and/or a diamine represented by Chemical Formula 2 to prepare an imide structural unit of a poly(amide-imide) copolymer. In this regard, the amide structural unit prepared by reacting a dicarbonyl compound represented by Chemical Formula 3 with a diamine represented by Chemical Formula 1 and/or a diamine represented by Chemical Formula 2 is known to increase mechanical properties of a poly(amide-imide) copolymer, and thus, in order to improve mechanical properties of a poly(amide-imide) copolymer efforts have been made to increase an amount of the amide structural unit in a poly(amideimide) copolymer. However, according to an embodiment, by reacting a dicarbonyl compound represented by Chemical Formula 3 with a tetracarboxylic acid dianhydride represented by Chemical Formula 4 in the above mole ratio, thus prepared poly(amideimide) copolymer may have increased mechanical properties, such as, for example, an increased toughness, while maintaining excellent optical properties, such as, for example, a high light transmittance, a low YI, a low YI difference after UV exposure, and a low haze, as well as a low refractive index. For example, a poly(amide-imide) copolymer according to an embodiment may have a light transmittance of greater than or equal to about 89% in a wavelength range of 350 nanometer (nm) to 750 nm, a YI of less than or equal to 2.1, a low YI difference after UV exposure of less than or equal to 1.0, a low refractive index of less than or equal to 1.68, and a high toughness of greater than or equal to about 1,000 Joul·m^{-3·}10⁴.

The total amount of the diamine represented by Chemical Formula 2 and the dicarbonyl compound represented by Chemical Formula 3 may be equal to or greater than 50 mole% based on the total amount of the compounds represented by Chemical Formulae 1 to 4. For example, the total amount of the diamine represented by Chemical Formula 2 and the dicarbonyl compound represented by Chemical Formula 3 may be equal to or greater than 50 mole%, for example, equal to or greater than 55 mole%, for example, equal to or greater than 60 mole%, for example, equal to or greater than 65 mole%, for example, equal to or greater than 70 mole%, for example, equal to or greater than 75 mole%, for example, equal to or greater than 80 mole%.

An aromatic diamine represented by Chemical Formula 2 may have a more rigid structure than a diamine represented by Chemical Formula 1, as the two or more aromatic rings of the diamine represented by Chemical Formula 2 are linked by a single bond, whereas the two aromatic rings of the diamine represented by Chemical Formula 1 are linked by a linking group other than the single bond. Further, the dicarbonyl compound represented by Chemical Formula 3 may have a rigid structure, and thus, by including a diamine represented by Chemical Formula 2 and a dicarbonyl compound represented by Chemical Formula 3, both of which have rigid structure, in an amount of greater than or equal to 50 mole% based on the total components for preparing a poly(amide-imide) copolymer according to an embodiment, the prepared poly(amideimide) copolymer may have good mechanical properties, for example, a high toughness. For example, as described later in detail in the Examples and Comparative Examples, the poly(amide-imide) copolymer film according to Comparative Example 3 contains 40 mole% of the total amount of the diamine represented by Chemical Formula 2, *i.e.,* TFDB, and a dicarbonyl compound represented by Chemical Formula 3, *i.e.,* TPCI, based on the total components represented by Chemical Formulae 1 to 4, and has a deteriorated toughness, as the total amount of TFDB and TPCI is less than 50 mole% based on the total amount of the reactants.

That is, a diamine represented by Chemical Formula 1 including two aromatic rings linked by a linking group that is not a single bond may be included in an amount of less than 50 mole%, for example, up to 49 mole%, based on the total amount of the diamine represented by Chemical Formula 1 and the diamine represented by Chemical Formula 2, and in this case, the total amount of the diamine represented by Chemical Formula 2 and the dicarbonyl compound represented by Chemical Formula 3 may be greater than or equal to 50 mole% based on the total components for preparing a poly(amide-imide) copolymer to have the prepared poly(amide-imide) copolymer having good optical properties, as well as excellent toughness.

In addition, the tetracarboxylic acid dianhydride represented by Chemical Formula 4 may be a combination of the compound represented by Chemical Formula 4 wherein R¹⁰ is a single bond, and both n7 and n8 are 0, and the compound represented by Chemical Formula 4 wherein R¹⁰ is -C(CₙF₂ₙ₊₁)₂- wherein 1≤n≤10, and both n7 and n8 are 0, in a mole ratio of 1: 1.5 to 6. In an exemplary embodiment, the tetracarboxylic acid dianhydride represented by Chemical Formula 4 may be a combination of 3,3',4,4'-biphenyl tetracarboxylic dianhydride (BPDA) and 4,4'-(hexafluoroisopropylidene)diphthalic anhydride (6FDA), and in this case, by including BPDA and 6FDA in the above ratio, the prepared poly(amide-imide) copolymer may have good optical properties, as well as improved mechanical properties.

When R¹⁰ is a single bond in the tetracarboxylic acid dianhydride represented by Chemical Formula 4, the tetracarboxylic acid dianhydride has much more rigid structure than those having different groups as R¹⁰. It has been known that as the amount of the tetracarboxylic acid dianhydride having rigid structure increases, mechanical properties of the prepared poly(amide-imide) copolymer increases. However, although the poly(amide-imide) copolymer according to an embodiment is prepared from a reactant wherein the amount of the tetracarboxylic acid dianhydride represented by Chemical Formula 4 having R¹⁰ which is not a single bond is greater than that having R¹⁰ which is a single bond, the poly(amide-imide) copolymer has improved mechanical properties, such as, for example, a high toughness of greater than or equal to about 1,000 Joul·m^{-3·}10⁴, while maintaining good optical properties, such as, for example, a high light transmittance, for example, greater than or equal to about 89% in a wavelength range of 350 nm to 750 nm, a YI of less than or equal to 2.1, and a low refractive index of less than or equal to 1.68.

Accordingly, the poly(amide-imide) copolymer according to an embodiment having excellent optical and mechanical properties may be advantageous for a use in a display device, such as, for example, as a window film for a flexible display device.

Another embodiment provides a composition for preparing a poly(amide-imide) copolymer including a diamine represented by Chemical Formula 5, a diamine represented by Chemical Formula 1, and a tetracarboxylic acid dianhydride represented by Chemical Formula 4: 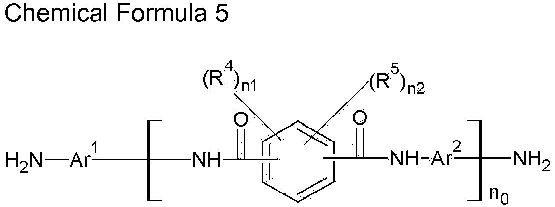 wherein, in Chemical Formula 5,
R⁴ and R⁵ are each independently a halogen, a hydroxy group, a substituted or unsubstituted C1 to C10 alkyl group, or a substituted or unsubstituted C1 to C10 alkoxy group,
n0 is an integer greater than or equal to 0,
n1 and n2 are each independently an integer ranging from 0 to 4, provided that n1+n2 is an integer ranging from 0 to 4, and
Ar¹ and Ar² are each independently represented by Chemical Formula 6: 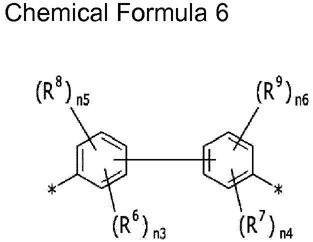
wherein, in Chemical Formula 6,
R⁶ and R⁷ are each independently an electron withdrawing group selected from-CF₃, -CCl₃, -CBr₃, -Cl₃, -NO₂, -CN, -C(=O)CH₃, and -CO₂C₂H₅,
R⁸ and R⁹ are each independently a halogen, a hydroxy group, a substituted or unsubstituted C1 to C10 aliphatic organic group, a substituted or unsubstituted C6 to C20 aromatic organic group, an alkoxy group of formula -OR²⁰⁴, wherein R²⁰⁴ is a C1 to C10 aliphatic organic group, or a silyl group of formula -SiR²⁰⁵R²⁰⁶R²⁰⁷ wherein R²⁰⁵, R²⁰⁶, and R²⁰⁷ are each independently hydrogen or a C1 to C10 aliphatic organic group,
n3 is an integer ranging from 1 to 4, n5 is an integer ranging from 0 to 3, provided that n3 + n5 is an integer ranging from 1 to 4, and
n4 is an integer ranging from 1 to 4, n6 is an integer ranging from 0 to 3, provided that n4 + n6 is an integer ranging from 1 to 4; 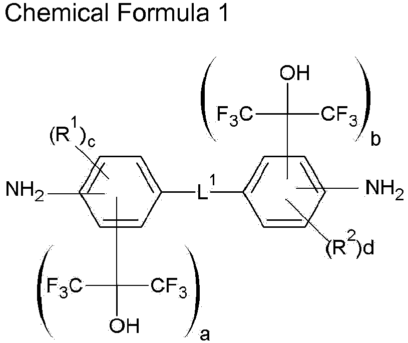
wherein in Chemical Formula 1,
R¹ and R² are each independently an halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-, - Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2; 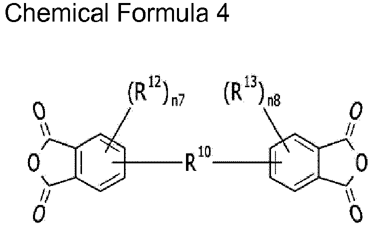
wherein, in Chemical Formula 4,
R¹⁰ is a single bond, -O-, -S-, -C(=O)-, -CH(OH)-, -C(=O)NH-, -S(=O)₂-, - Si(CH₃)₂-, -(CH₂)ₚ- wherein 1≤p≤10, -(CF₂)_{q}- wherein 1≤q≤10, -C(CₙH₂ₙ₊₁)₂-,-C(CₙF₂ₙ₊₁)₂-, -(CH₂)ₚC(CₙH₂ₙ₊₁)₂(CH₂)_{q}-, or -(CH₂)ₚC(CₙF₂ₙ₊₁)₂(CH₂)_{q}- wherein 1≤n≤10, 1≤p≤10, and 1≤q≤10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group, and
n7 and n8 are each independently an integer ranging from 0 to 3.

Both n1 and n2 in Chemical Formula 5 may be 0 (zero), and in Chemical Formula 6, both R⁶ and R⁷ may be -CF₃, both n3 and n4 may be 1, and both n5 and n6 may be 0 (zero).

As described above, in a conventional method for preparing a poly(amide-imide) copolymer, an amide structural unit may first be prepared by a reaction of a dicarbonyl compound and a diamine, and then an additional diamine and a dianhydride compound are added to the reactor to prepare an amic acid structural unit, as well as a poly(amideimide) copolymer by linking the amide structural unit and the amic acid structural unit. Meanwhile, in the process of preparing the amide structural unit, there is a problem that a by-product, such as, halogenated hydrogen (HX: 'H' indicates hydrogen, and 'X' indicates halogen), for example, hydrogen chloride (HCI), is produced. The hydrogen chloride by-product causes corrosion of an element of an apparatus, and thus, should necessarily be removed by a precipitation process. In order to remove the by-product, an HX scavenger, such as a tertiary amine, may be added to the reactor, whereby a salt of HX is produced (please see Reaction Scheme 1 below). If the produced salt of HX is not removed and a film is produced therefrom, serious deterioration of optical properties of the produced film occurs. Therefore, a precipitation process to remove the salt of HX is required in the conventional method for preparing poly(amide-imide) copolymer. The precipitation process increases total process time and cost, while reducing the yield of the final poly(amide-imide) copolymer produced therefrom.

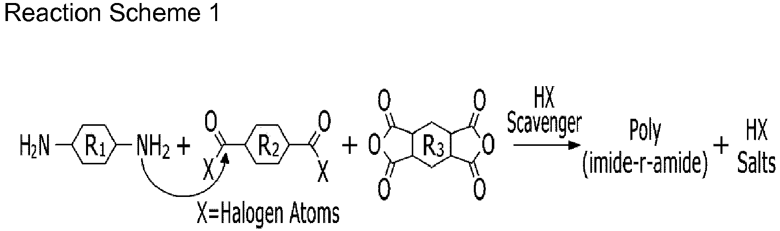

In addition to using the conventional method including the precipitation process as described above, it is also possible to prepare a poly(amide-imide) copolymer according to an embodiment by first reacting a diamine and a dicarbonyl compound to prepare an amide structural unit-containing oligomer having amino groups at both ends thereof (hereinafter, referred to as "an amide structural unit-containing oligomer"), and then reacting the prepared amide structural unit-containing oligomer as a diamine monomer with a tetracarboxylic acid dianhydride to provide a poly(amide-imide) copolymer. According to the new method for preparing a poly(amide-imide) copolymer, the precipitation process for removing the HX salt may be omitted, and thus, not only the total process time and cost may be reduced, but also the yield of the final poly(amide-imide) copolymer may increase. Further, it is also possible to obtain a poly(amide-imide) copolymer including a higher amount of an amide structural unit than those prepared by using the conventional method, and thus, an article prepared from the poly(amide-imide) copolymer, for example, a film, may have further improved mechanical properties, while maintaining good optical properties.

Accordingly, another embodiment provides a composition for preparing a poly(amide-imide) copolymer including an amide structural unit-containing oligomer represented by Chemical Formula 5 as a diamine monomer, which may be prepared by reacting a diamine and a dicarbonyl compound, a tetracarboxylic acid dianhydride represented by Chemical Formula 4 for reacting with the oligomer to provide an imide structural unit, and as an additional diamine, a diamine represented by Chemical Formula 1 for reacting with the tetracarboxylic acid dianhydride represented by Chemical Formula 4 to provide an imide structural unit.

The diamine represented by Chemical Formula 5 may be prepared by reacting a dicarbonyl compound represented by Chemical Formula 3 in which R³ is a substituted or unsubstituted phenylene group, and a diamine represented by Chemical Formula 2 in which A is represented by Chemical Formula 6, wherein the diamine represented by Chemical Formula 2 may be added in a greater amount than the dicarbonyl compound represented by Chemical Formula 3 to provide an oligomer having amino groups at both ends thereof. In this case, there may be a remaining diamine that does not react with the dicarbonyl compound, which may also be represented by Chemical Formula 5, wherein n0 is 0 (zero). Accordingly, the diamine represented by Chemical Formula 5 wherein n0 is 0 may also be reacted with a tetracarboxylic acid dianhydride represented by Chemical Formula 4 along with the diamine represented by Chemical Formula 5 wherein n0 is greater than or equal to 1 to prepare an imide structural unit.

In an embodiment, the composition may further include a diamine represented by Chemical Formula 2:

Chemical Formula 2 NH₂-A-NH₂

wherein in Chemical Formula 2,
A is a ring system including two or more C6 to C30 aromatic rings linked by a single bond, wherein each of the two or more aromatic rings is independently unsubstituted or substituted by an electron-withdrawing group;
In an exemplary embodiment, the diamine represented by Chemical Formula 2 may have a ring system including two C6 to C12 aromatic rings linked by a single bond, wherein each of the two C6 to C12 aromatic rings may independently be substituted by an electron-withdrawing group selected from an halogen atom, a nitro group, a cyano group, a C1 or C2 haloalkyl group, a C2 to C6 alkanoyl group, or a C1 to C6 ester group.

In an exemplary embodiment, the diamine represented by Chemical Formula 2 may include at least one selected from the diamines represented by the following chemical formulae:

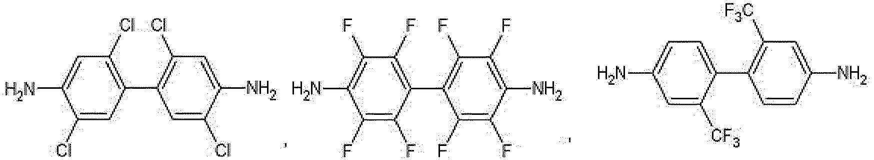

The diamine represented by Chemical Formula 2 may include a diamine represented by Chemical Formula A, i.e., 2,2'-bis(trifluoromethyl)benzidine (TFDB):

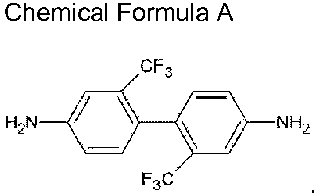

The tetracarboxylic acid dianhydride represented by Chemical Formula 4 may be a combination of the compound represented by Chemical Formula 4-1 and the compound represented by Chemical Formula 4-2, but is not limited thereto:

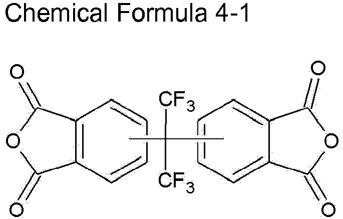

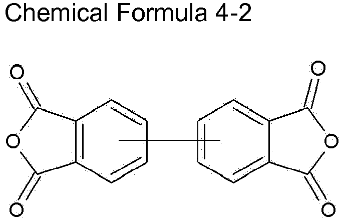

The compound represented by Chemical Formula 4-1 may be 6FDA, the compound represented by Chemical Formula 4-2 may be at least one of s-BPDA, a-BPDA, and i-BPDA, and in an exemplary embodiment, the compound represented by Chemical Formula 4-2 may be s-BPDA.

Explanations for the compounds represented by Chemical Formulae 1 to 4 are the same as those described above for the poly(amide-imide) copolymer according to an embodiment, and thus, a more detailed explanation for the compounds are omitted here.

After preparing a poly(amide-imide) copolymer from the composition, an article may be formed from the poly(amide-imide) copolymer through a dry-wet method, a dry method, or a wet method, but is not limited thereto. When the article is a film, it may be manufactured using a solution including the composition through the dry-wet method, wherein a layer is formed by extruding the solution of the composition from a mouth piece on a supporter, such as drum or an endless belt, drying the layer by evaporating the solvent from the layer until the layer has a self-maintenance property. The drying may be performed by heating, for example, from about 25°C to about 150°C, within about 1 hour or less. Then, the dried layer may be heated from the room temperature to about 250°C or to about 300°C at a heating rate of about 10°C per minute, and then be allowed to stand at the heated temperature for about 5 minutes to about 30 minutes to obtain a polyimide-based film.

When the surface of the drum and/or the endless belt used for the drying process becomes flat, a layer with a flat surface is formed. The layer obtained after the drying process is delaminated from the supporter, and subjected to a wet process, desalted, and/or desolventized. The manufacturing of the film is completed after the layer is elongated, dried, and/or heat treated. The heat treatment may be performed at about 200°C to about 500°C, for example, at about 250°C to about 400°C, for several seconds to several minutes. After the heat treatment, the layer may be cooled slowly, for example, at a cooling rate of less than or equal to about 50°C per minute.

The layer may be formed as a single layer or multiple layers.

When prepared as a film, the film may have a yellowness index (YI) of less than or equal to 2.1 at a thickness of about 35 micrometers (µm) to about 100 µm according to an ASTM D1925 method, and a light transmittance of greater than or equal to 89% in a wavelength range of 350 nm to 750 nm. Further, the yellowness difference (ΔYI) before and after exposure to UVB lamp (greater than or equal to 200 mJ/cm²) for 72 hours may be less than 1, for example, less than or equal to 0.95, and a refractive index may be less than or equal to 1.68, which prove very good optical properties. Further, toughness of the film may be greater than or equal to 1,000 Joul·m^{-3·}10⁴, which proves good mechanical properties.

That is, the article may maintain excellent optical properties of a poly(amideimide) copolymer, such as, for example, a low YI and high light transmittance, while maintaining a low refractive index and high toughness, and thus may be advantageous for a use as a window film for a flexible display device.

Hereafter, the technology of this disclosure is described in detail with reference to examples. The following examples and comparative examples are not restrictive but are illustrative only.

### EXAMPLES

### Synthesis Example 1: Preparation of an oligomer containing 70 mol% of an amide structural unit as a diamine monomer

An amide structural unit-containing oligomer, as a diamine monomer, is prepared by reacting TPCI and 2,2'-bis(trifluoromethyl)benzidine (TFDB), in accordance with Reaction Scheme 2:

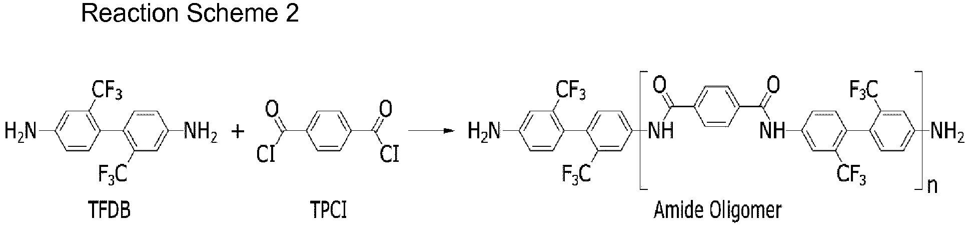

That is, 1 mole equivalent (0.122 mole, 39.2 grams) of 2,2'-bis(trifluoromethyl)benzidine (TFDB) and 2.8 mole equivalent (0.343 mole, 27.11 grams,) of pyridine are dissolved in 700 g of N,N-dimethyl acetamide (DMAc) as a solvent in a round-bottomed flask, and 50 milliliters (mL) of DMAC is further added to the flask to dissolve the remaining TFDB. Then, 0.7 mole equivalent (0.086 mole, 17.4 g) of terephthaloyl chloride (TPCI) is divided into 4 portions, which are individually added, each portion at a time, to be mixed with the TFDB solution. The mixture is then vigorously stirred and reacted for 15 minutes at room temperature.

The resultant solution is further stirred under a nitrogen atmosphere for 2 hours, and then added to 7 liters of water containing 350 g of NaCl. The resulting mixture is stirred for 10 minutes. Subsequently, a solid produced therein is filtered, re-suspended twice by using 5 liters (L) of deionized water, and then re-filtered. The water remaining in the final product on the filter is removed as much as possible by thoroughly pressing the filtered precipitate on a filter. The precipitate is then dried at 90°C under vacuum for 48 hours, to obtain an amide structural unit-containing oligomer represented in Reaction Scheme 2, as a diamine monomer, as a final product. The prepared oligomer containing 70 mol% of amide structural unit has a number average molecular weight of about 997 grams per mole (gram/mole).

### Examples and Comparative Example: Preparation of poly(amide-imide) copolymer films

### Example 1

117 grams of N,N-dimethyl acetamide (DMAc) as a solvent is charged into a 4-neck double-walled 250 mL reactor, pre-heated to 25°C, and equipped with a mechanical stirrer and a nitrogen inlet. Then, 20.25 grams (0.014 moles) of the 70 mol% of amide structural unit-containing oligomer prepared in Synthesis Example 1, 0.76 g (0.0023 mol) of 2,2'-bis(trifluoromethyl)benzidine (TFDB), and 2.94 g (0.0055 mol) of 3,3'-Bis(1-hydroxy-1-trifluoromethyl-2,2,2-trifluoroethyl)-4,4'-methylenedianiline (HFA-MDA) are added thereto and dissolved, and the temperature is set to 25°C. Then, 1.63 grams (0.0055 moles) of 3,3',4,4'-biphenyltetracarboxylic dianhydride (BPDA), and 7.4 grams (0.016 moles) of 4,4'-(hexafluoroisopropylidene)diphthalic anhydride (6FDA) are added thereto, and the mixture is stirred for 48 hours. Then, 1.69 grams of pyridine and 6.81 grams of acetic anhydride are added thereto, and the mixture is stirred for 24 hours to obtain a poly(amic acid-amide) copolymer solution, of which the solid content is 21 weight%.

After cooling the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 227°C, at a heating rate of 10°C per minutes, maintained at 227°C for about 25 minutes, and slowly cooled to room temperature to obtain a poly(amide-imide) copolymer film.

### Example 2

117 grams of N,N-dimethyl acetamide (DMAc) as a solvent is charged into a 4-neck double-walled 250 mL reactor, pre-heated to 25°C, and equipped with a mechanical stirrer and a nitrogen inlet. Then, 15.56 grams (0.01 moles) of the 70 mol% of amide structural unit-containing oligomer prepared in Synthesis Example 1, 1.4 g (0.004 mol) of 2,2'-bis(trifluoromethyl)benzidine (TFDB), and 2.94 g (0.0055 mol) of 3,3'-Bis(1-hydroxy-1-trifluoromethyl-2,2,2-trifluoroethyl)-4,4'-methylenedianiline (HFA-MDA) are added thereto and dissolved, and the temperature is set to 25°C. Then, 1.5 grams (0.005 moles) of 3,3',4,4'-biphenyltetracarboxylic dianhydride (BPDA), and 9.09 grams (0.02 moles) of 4,4'-(hexafluoroisopropylidene)diphthalic anhydride (6FDA) are added thereto, and the mixture is stirred for 48 hours. Then, 2.0 grams of pyridine and 7.84 grams of acetic anhydride are added thereto, and the mixture is stirred for 24 hours to obtain a poly(amic acid-amide) copolymer solution, of which the solid content is 21 weight%.

After cooling the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 227°C, at a heating rate of 10°C per minutes, maintained at 227°C for about 25 minutes, and slowly cooled to room temperature to obtain a poly(amide-imide) copolymer film.

### Example 3

117 grams of N,N-dimethyl acetamide (DMAc) as a solvent is charged into a 4-neck double-walled 250 mL reactor, pre-heated to 25°C, and equipped with a mechanical stirrer and a nitrogen inlet. Then, 11.55 grams (0.008 moles) of the 70 mol% of amide structural unit-containing oligomer prepared in Synthesis Example 1, 1.95g (0.006 mol) of 2,2'-bis(trifluoromethyl)benzidine (TFDB), and 7.55 g (0.014 mol) of 3,3'-Bis(1-hydroxy-1-trifluoromethyl-2,2,2-trifluoroethyl)-4,4'-methylenedianiline (HFA-MDA) are added thereto and dissolved, and the temperature is set to 25°C. Then, 1.4 grams (0.0047 moles) of 3,3',4,4'-biphenyltetracarboxylic dianhydride (BPDA), and 10.54 grams (0.023 moles) of 4,4'-(hexafluoroisopropylidene)diphthalic anhydride (6FDA) are added thereto, and the mixture is stirred for 48 hours. Then, 2.25 grams of pyridine and 8.73 grams of acetic anhydride are added thereto, and the mixture is stirred for 24 hours to obtain a poly(amic acid-amide) copolymer solution, of which the solid content is 21 weight%.

After cooling the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 227°C, at a heating rate of 10°C per minutes, maintained at 227°C for about 25 minutes, and slowly cooled to room temperature to obtain a poly(amide-imide) copolymer film.

### Example 4

123 grams of N,N-dimethyl acetamide (DMAc) as a solvent is charged into a 4-neck double-walled 250 mL reactor, pre-heated to 25°C, and equipped with a mechanical stirrer and a nitrogen inlet. Then, 9.26 grams (0.0064 moles) of the 70 mol% of amide structural unit-containing oligomer prepared in Synthesis Example 1, 0.34 g (0.001 mol) of 2,2'-bis(trifluoromethyl)benzidine (TFDB), and 7.95 g (0.015 mol) of 3,3'-Bis(1-hydroxy-1-trifluoromethyl-2,2,2-trifluoroethyl)-4,4'-methylenedianiline (HFA-MDA) are added thereto and dissolved, and the temperature is set to 25°C. Then, 1.1 grams (0.003 moles) of 3,3',4,4'-biphenyltetracarboxylic dianhydride (BPDA), and 8.32 grams (0.018 moles) of 4,4'-(hexafluoroisopropylidene)diphthalic anhydride (6FDA) are added thereto, and the mixture is stirred for 48 hours. Then, 1.78 grams of pyridine and 6.89 grams of acetic anhydride are added thereto, and the mixture is stirred for 24 hours to obtain a poly(amic acid-amide) copolymer solution, of which the solid content is 17 weight%.

After cooling the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 227°C, at a heating rate of 10°C per minutes, maintained at 227°C for about 25 minutes, and slowly cooled to room temperature to obtain a poly(amide-imide) copolymer film.

### Example 5

120 grams of N,N-dimethyl acetamide (DMAc) as a solvent is charged into a 4-neck double-walled 250 mL reactor, pre-heated to 25°C, and equipped with a mechanical stirrer and a nitrogen inlet. Then, 10.97 grams (0.0077 moles) of the 70 mol% of amide structural unit-containing oligomer prepared in Synthesis Example 1, 1.85 g (0.005 mol) of 2,2'-bis(trifluoromethyl)benzidine (TFDB), and 7.17 g (0.013 mol) of 3,3'-Bis(1-hydroxy-1-trifluoromethyl-2,2,2-trifluoroethyl)-4,4'-methylenedianiline (HFA-MDA) are added thereto and dissolved, and the temperature is set to 25°C. Then, 3.98 grams (0.013 moles) of 3,3',4,4'-biphenyltetracarboxylic dianhydride (BPDA), and 6.01 grams (0.013 moles) of 4,4'-(hexafluoroisopropylidene)diphthalic anhydride (6FDA) are added thereto, and the mixture is stirred for 48 hours. Then, 2.14 grams of pyridine and 8.29 grams of acetic anhydride are added thereto, and the mixture is stirred for 24 hours to obtain a poly(amic acid-amide) copolymer solution, of which the solid content is 19 weight%.

After cooling the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 227°C, at a heating rate of 10°C per minutes, maintained at 227°C for about 25 minutes, and slowly cooled to room temperature to obtain a poly(amide-imide) copolymer film.

### Comparative Example 1

123 grams of N,N-dimethyl acetamide (DMAc) as a solvent is charged into a 4-neck double-walled 250 mL reactor, pre-heated to 25°C, and equipped with a mechanical stirrer and a nitrogen inlet, and 21.38 grams (0.015 moles) of the 70 mol% of amide structural unit-containing oligomer prepared in Synthesis Example 1 is added thereto and dissolved. Then, 2.06 grams (0.007 moles) of BPDA, and 3.55 grams (0.008 moles) of 4,4'-(hexafluoroisopropylidene)diphthalic anhydride (6FDA) are added to the solution, and the mixture is stirred for 48 hours at 25°C. Then, 1.19 grams of pyridine and 4.6 grams of acetic anhydride are added thereto, and the mixture is stirred for 24 hours to obtain a poly(amic acid-amide) copolymer solution, of which the solid content is 18 weight%.

After cooling down the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 277°C, at a heating rate of 10°C per minutes, maintained at 277°C for about 25 minutes, and slowly cooled to room temperature to obtain a poly(amide-imide) copolymer film.

### Comparative Example 2

123 grams of N,N-dimethyl acetamide (DMAc) as a solvent is charged into a 4-neck double-walled 250 mL reactor, pre-heated to 25°C, and equipped with a mechanical stirrer and a nitrogen inlet, and 13.62 grams (0.0096 moles) of the 70 mol% of amide structural unit-containing oligomer prepared in Synthesis Example 1, and 4.09 g (0.012 mol) of 2,2'-bis(trifluoromethyl)benzidine (TFDB) are added thereto and dissolved, and the temperature is set to 25°C. Then, 1.31 grams (0.0044 moles) of BPDA, and 7.96 grams (0.017 moles) of 4,4'-(hexafluoroisopropylidene)diphthalic anhydride (6FDA) are added to the solution, and the mixture is stirred for 48 hours at 25°C. Then, 1.77 grams of pyridine and 6.86 grams of acetic anhydride are added thereto, and the mixture is stirred for 24 hours to obtain a poly(amic acid-amide) copolymer solution, of which the solid content is 17 weight%.

After cooling down the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 277°C, at a heating rate of 10°C per minutes, maintained at 277°C for about 25 minutes, and slowly cooled to room temperature to obtain a poly(amide-imide) copolymer film.

### Comparative Example 3

114 grams of N,N-dimethyl acetamide (DMAc) as a solvent is charged into a 4-neck double-walled 250 mL reactor, pre-heated to 25°C, and equipped with a mechanical stirrer and a nitrogen inlet, and 8.57 grams (0.006 moles) of the 70 mol% of amide structural unit-containing oligomer prepared in Synthesis Example 1, 1.07 g (0.003 mol) of 2,2'-bis(trifluoromethyl)benzidine (TFDB), and 12.44 grams (0.023 mol) of 3,3'-Bis(1-hydroxy-1-trifluoromethyl-2,2,2-trifluoroethyl)-4,4'-methylenedianiline (HFA-MDA) are added thereto and dissolved. Then, 1.38 grams (0.004 moles) of BPDA, and 12.51 grams (0.028 moles) of 4,4'-(hexafluoroisopropylidene)diphthalic anhydride (6FDA) are added to the solution, and the mixture is stirred for 48 hours at 25°C. Then, 2.6 grams of pyridine and 10.0 grams of acetic anhydride are added thereto, and the mixture is stirred for 24 hours to obtain a poly(amic acid-amide) copolymer solution, of which the solid content is 22 weight%.

After cooling down the poly(amic acid-amide) solution to a temperature of 25°C, the solution is casted on a glass substrate, and dried for 40 minutes on a hot plate at a temperature of 100°C. Then, the film is separated from the glass substrate and introduced into a furnace, wherein the temperature is increased from the room temperature to 277°C, at a heating rate of 10°C per minutes, maintained at 277°C for about 25 minutes, and slowly cooled to room temperature to obtain a poly(amide-imide) copolymer film.

### Evaluation: Evaluation of mechanical and optical properties of the films

Each of the poly(amide-imide) copolymer films prepared in Examples 1 to 5 and Comparative Examples 1 to 3 are evaluated for mechanical properties and optical properties, and the obtained values are described in Table 1 below.

Particularly, a light transmittance, YI, YI difference after exposure UV ray, haze, toughness, and refractive index for each film are measured.

Yellowness index (YI), light transmittance (at a wavelength range of 350 nanometers (nm) to 750 nm), and haze are measured for a film having a thickness of about 50 micrometers, according to an ASTM D1925 method by using a spectrophotometer, CM-3600d made by Konica Minolta Inc. YI difference (ΔYI) before and after exposure to UV light is measured for the YI difference before and after exposure to an ultraviolet (UV) lamp of a UVB wavelength region for 72 hours.

Toughness is measured according to an ASTM D882 method, and is determined by calculating the total area by multiplying the X axis for strain and the Y axis for stress.

Refractive index is measured by using Ellipsometer (M-2000, J.A.Woollam Co., Ltd.) in a visible ray region for the value of at 550 nanometer established by the Gen-Osc model.

**Table 1**

| | composition | Thickness [µm] | Transmittance [%] | YI@ 50 µm [-] | ΔYI | Haze (%) | Toughness [joule.m⁻³.10⁴] | Refractive index |
|---|---|---|---|---|---|---|---|---|
| Example 1 | TPCI / 6FDA / BPDA / TFDB / HFA-MDA = 60/30/10/90/10 | 50 | 89.3 | 2.04 | 0.76 | 0.79 | 1723 | 1.68 |
| Example 2 | TPCI / 6FDA / BPDA / TFDB / HFA-MDA = 50/40/10/80/20 | 44 | 90.0 | 1.78 | 0.91 | 0.48 | 1864 | 1.66 |
| Example 3 | TPCI / 6FDA / BPDA / TFDB / HFA-MDA = 40/50/10/70/30 | 47 | 90.4 | 1.66 | 0.42 | 0.5 | 1420 | 1.64 |
| Example 4 | TPCI / 6FDA / BPDA / TFDB / HFA-MDA = 40/50/10/60/40 | 58 | 90.6 | 1.35 | 0.9 | 0.3 | 1794 | 1.60 |
| Example 5 | TPCI / 6FDA / BPDA / TFDB / HFA-MDA = 40/30/30/70/30 | 46 | 89.9 | 2.01 | 0.57 | 0.21 | 1386 | 1.61 |
| Comparative Example 1 | TPCI /6FDA / BPDA / TFDB =70/16/14/100 | 50 | 88.6 | 2.48 | 0.8 | 0.67 | 1033 | 1.69 |
| Comparative Example 2 | TPCI / 6FDA / BPDA / TFDB =50/40/10/100 | 47 | 89.6 | 1.87 | 0.79 | 0.4 | 1585 | 1.685 |
| Comparative Example 3 | TPCI / 6FDA / BPDA / TFDB / HFA-MDA = 30/60/10/50/50 | 52 | 90.8 | 1.48 | 0.8 | 0.59 | 900 | 1.60 |

As shown in Table 1, all the films according to Examples 1 to 5 have light transmittances of greater than or equal to 89%, YIs of less than or equal to 2.1, YI difference (ΔYI: difference of YI before and after exposing to an UVB lamp for 72 hours) of less than or equal to 1.0, toughness of greater than or equal to 1,000 Joul·m^{-3·}10⁴, and refractive indices of less than or equal to 1.68, *i.e.,* show good optical properties, as well as improved toughness.

On the contrary, the films according to Comparative Example 2, which does not include 3,3'-Bis(1-hydroxy-1-trifluoromethyl-2,2,2-trifluoroethyl)-4,4'-methylenedianiline (HFA-MDA) as a diamine component, although the other components thereof for preparing the film are the same as those of Example 2, except for not including HFA-MDA, have optical properties, such as, for example, a light transmittance, and YI deteriorated to a great extent compared to Example 2. Further, the film according to Comparative Example 2 has also lower toughness than that according to Example 2.

The film according to Comparative Example 3 has very low toughness, as it contains HFA-MDA in an amount of 50 mole% based on the total amount of the diamines and the sum of TPCI and TFDB in an amount of 40 mole%, i.e., much less than 50 mole%, based on the total mole number of the total monomers.

As shown above, the poly(amide-imide) copolymer according to an embodiment is prepared by using an aromatic diamine, an aromatic dianhydride, and an aromatic dicarbonyl compound, wherein the aromatic diamine includes a first diamine having two or more aromatic rings linked by a single bond, such as, for example, TFDB, whereby rendering the poly(amide-imide) copolymer having improved mechanical properties, and a second diamine having two aromatic rings linked by a flexible linking group and each being substituted by a functional group having a fluorine group, whereby rendering the poly(amide-imide) copolymer having a relatively low refractive index and high flexibility, and thus, it may have good mechanical properties at the same time, especially further improved optical properties due to relatively low refractive index, as well as relatively high toughness, as compared with the conventional poly(amide-imide) copolymer.

While this disclosure has been described in connection with what is presently considered to be practical exemplary embodiments, it is to be understood that the present disclosure is not limited to the embodiments presented herein, but, on the contrary, is intended to cover various modifications and equivalent arrangements included within the scope of the appended claims.

## Claims

1. A poly(amide-imide) copolymer that is a reaction product of a diamine represented by Chemical Formula 1, a diamine represented by Chemical Formula 2, a dicarbonyl compound represented by Chemical Formula 3, and a tetracarboxylic acid dianhydride represented by Chemical Formula 4: 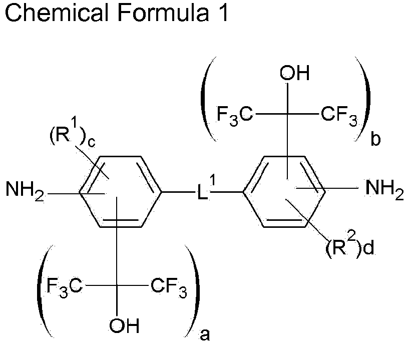 wherein in Chemical Formula 1,
R¹ and R² are each independently an halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-,-Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2;
Chemical Formula 2 NH₂-A-NH₂
wherein in Chemical Formula 2,
A is a ring system comprising two or more C6 to C30 aromatic rings linked by a single bond, wherein each of the two or more aromatic rings is independently unsubstituted or substituted by an electron-withdrawing group; 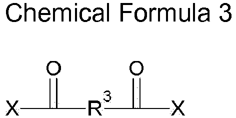 wherein, in Chemical Formula 3,
R³ is a substituted or unsubstituted phenylene or biphenylene group, and
each X is an identical or different halogen atom; 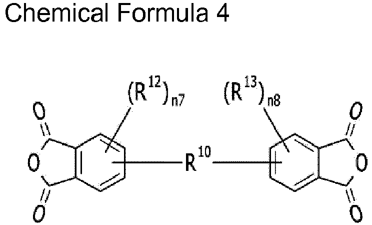
wherein, in Chemical Formula 4,
R¹⁰ is a single bond, -O-, -S-, -C(=O)-, -CH(OH)-, -C(=O)NH-, -S(=O)₂-,-Si(CH₃)₂-, -(CH₂)ₚ-, -(CF₂)_{q}-, -C(CₙH₂ₙ₊₁)₂-, -C(CₙF₂ₙ₊₁)₂-, -(CH₂)ₚC(CₙH₂ₙ₊₁)₂(CH₂)_{q}-, or-(CH₂)ₚC(CₙF₂ₙ₊₁)₂(CH₂)_{q}- wherein 1≤n≤10, 1≤p≤10, and 1≤q≤10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group, and
n7 and n8 are each independently an integer ranging from 0 to 3.

2. The poly(amide-imide) copolymer according to Claim 1, wherein in Chemical Formula 1, L¹ is a C1 to C20 alkylene group, R¹ and R² are each independently F or Cl, both a and b are 1, and c and d are each independently an integer ranging from 0 to 2; and/or
wherein in Chemical Formula 1, L¹ is methylene group, both a and b are 1, and both c and d are 0.

3. The poly(amide-imide) copolymer according to Claims 1 or 2, wherein the diamine represented by Chemical Formula 2 comprises a ring system including two C6 to C12 aromatic rings linked by a single bond, wherein each of the two C6 to C12 aromatic rings are independently substituted by an electron-withdrawing group selected from a halogen atom, a nitro group, a cyano group, a C1 or C2 haloalkyl group, a C2 to C6 alkanoyl group, or a C1 to C6 ester group;
preferably wherein the diamine represented by Chemical Formula 2 comprises at least one selected from the diamines represented by the following chemical formulae: 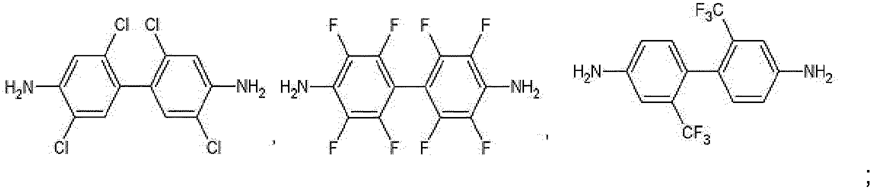 preferably wherein the diamine represented by Chemical Formula 2 comprises a diamine represented by Chemical Formula A:

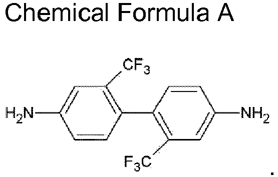

4. The poly(amide-imide) copolymer according to any of Claims 1-3, wherein in Chemical Formula 3, R³ is a phenylene group, and each X is independently Cl or Br.

5. The poly(amide-imide) copolymer according to any of Claims 1-4, wherein the tetracarboxylic acid dianhydride represented by Chemical Formula 4 comprises at least one selected from 3,3',4,4'-biphenyl tetracarboxylic dianhydride (BPDA), 3,3',4,4'-diphenylsulfone tetracarboxylic dianhydride (DSDA), 4,4'-(hexafluoroisopropylidene)diphthalic anhydride (6FDA), and 4,4'-oxydiphthalic anhydride (ODPA).

6. The poly(amide-imide) copolymer according to any of Claims 1-5, wherein the tetracarboxylic acid dianhydride represented by Chemical Formula 4 comprises a combination of 3,3',4,4'-biphenyl tetracarboxylic dianhydride and 4,4'-(hexafluoroisopropylidene)diphthalic anhydride.

7. The poly(amide-imide) copolymer according to any of Claims 1-6, wherein an amount of the diamine represented by Chemical Formula 1 is less than 50 mole percent based on the total amount of the diamine represented by Chemical Formula 1 and the diamine represented by Chemical Formula 2; and/or
wherein a mole ratio of the dicarbonyl compound represented by Chemical Formula 3 and the tetracarboxylic acid dianhydride represented by Chemical Formula 4 is 30 to 70: 70 to 30.

8. The poly(amide-imide) copolymer according to any of Claims 1-7, wherein the total amount of the diamine represented by Chemical Formula 2 and the dicarbonyl compound represented by Chemical Formula 3 are equal to or greater than 50 mole percent based on the total amount of the compounds represented by Chemical Formulae 1 to 4.

9. A composition for preparing a poly(amide-imide) copolymer comprising a diamine represented by Chemical Formula 5, a diamine represented by Chemical Formula 1, and a tetracarboxylic acid dianhydride represented by Chemical Formula 4: 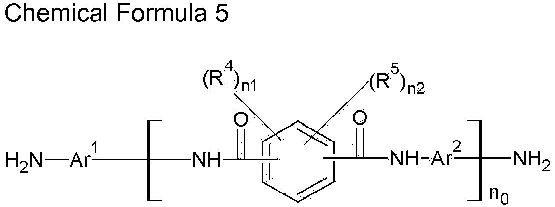 wherein, in Chemical Formula 5,
R⁴ and R⁵ are each independently a halogen, a hydroxy group, a substituted or unsubstituted C1 to C10 alkyl group, or a substituted or unsubstituted C1 to C10 alkoxy group,
n0 is an integer greater than or equal to 0,
n1 and n2 are each independently an integer ranging from 0 to 4, provided that n1+n2 is an integer ranging from 0 to 4, and
Ar¹ and Ar² are each independently represented by Chemical Formula 6: 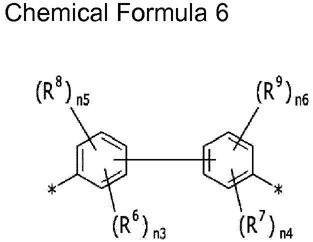
wherein, in Chemical Formula 6,
R⁶ and R⁷ are each independently an electron withdrawing group selected from - CF₃, -CCl₃, -CBr₃, -Cl₃, -NO₂, -CN, -C(=O)CH₃, and -CO₂C₂H₅,
R⁸ and R⁹ are each independently a halogen, a hydroxy group, a substituted or unsubstituted C1 to C10 aliphatic organic group, a substituted or unsubstituted C6 to C20 aromatic organic group, an alkoxy group of formula -OR²⁰⁴, wherein R²⁰⁴ is a C1 to C10 aliphatic organic group, or a silyl group of formula -SiR²⁰⁵R²⁰⁶R²⁰⁷ wherein R²⁰⁵, R²⁰⁶, and R²⁰⁷ are each independently hydrogen or a C1 to C10 aliphatic organic group,
n3 is an integer ranging from 1 to 4, n5 is an integer ranging from 0 to 3, provided that n3 + n5 is an integer ranging from 1 to 4, and
n4 is an integer ranging from 1 to 4, n6 is an integer ranging from 0 to 3, provided that n4 + n6 is an integer ranging from 1 to 4; 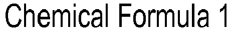 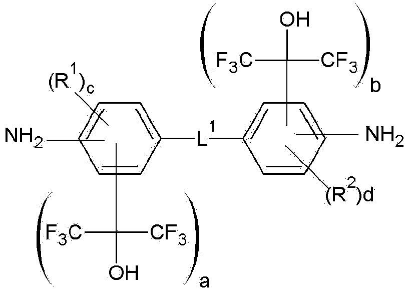
wherein in Chemical Formula 1,
R¹ and R² are each independently an halogen atom,
L¹ is a substituted or unsubstituted C1 to C20 alkylene group, a substituted or unsubstituted C3 to C30 cycloalkylene group, -O-, -S-, -C(=O)-, -CH(OH)-, -S(=O)₂-, - Si(CH₃)₂-, -(CF₂)_{q}- wherein, 1≤q≤10, -C(CH₃)₂-, -C(CF₃)₂-, -C(=O)NH-, or a combination thereof,
a and b are each independently an integer ranging from 0 to 2, provided that 1≤a+b≤4,
c and d are each independently an integer ranging from 0 to 2; 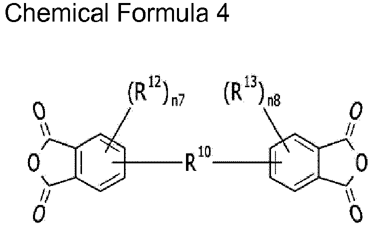
wherein, in Chemical Formula 4,
R¹⁰ is a single bond, -O-, -S-, -C(=O)-, -CH(OH)-, -C(=O)NH-, -S(=O)₂-,-Si(CH₃)₂-, -(CH₂)ₚ-, -(CF₂)_{q}-, -C(CₙH₂ₙ₊₁)₂-, -C(CₙF₂ₙ₊₁)₂-, -(CH₂)ₚC(CₙH₂ₙ₊₁)₂(CH₂)_{q}-, or-(CH₂)ₚC(CₙF₂ₙ₊₁)₂(CH₂)_{q}- wherein 1 ≤n≤ 10, 1 ≤p≤ 10, and 1 ≤q≤ 10,
R¹² and R¹³ are each independently a halogen, a hydroxy group, a substituted or unsubstituted C1 to C10 aliphatic organic group, a substituted or unsubstituted C6 to C20 aromatic organic group, an alkoxy group of formula -OR²⁰¹, wherein R²⁰¹ is a C1 to C10 aliphatic organic group, or a silyl group of formula -SiR²¹⁰R²¹¹R²¹², wherein R²¹⁰, R²¹¹, and R²¹² are each independently hydrogen or a C1 to C10 aliphatic organic group, and
n7 and n8 are each independently an integer ranging from 0 to 3.

10. The composition for preparing a poly(amide-imide) copolymer according to Claim 9, wherein the composition further comprises a diamine represented by Chemical Formula 2:
Chemical Formula 2 NH₂-A-NH₂
wherein in Chemical Formula 2,
A is a ring system including two or more C6 to C30 aromatic rings linked by a single bond, wherein each of the two or more aromatic rings is independently unsubstituted or substituted by an electron-withdrawing group.

11. The composition for preparing a poly(amide-imide) copolymer according to Claims 9 or 10, wherein in Chemical Formula 1, L¹ is a C1 to C20 alkylene group, R¹ and R² are each independently F or Cl, both a and b are 1, and c and d are each independently an integer ranging from 0 to 2.

12. The composition for preparing a poly(amide-imide) copolymer according to any of Claims 9-11, wherein the tetracarboxylic acid dianhydride represented by Chemical Formula 4 comprises a combination of the compound represented by Chemical Formula 4-1, and the compound represented by Chemical Formula 4-2:

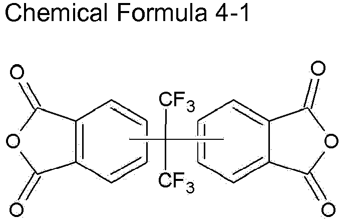

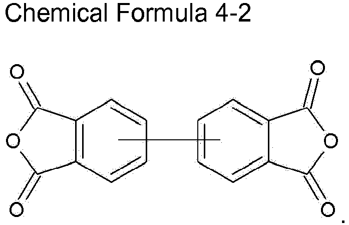

13. The composition for preparing a poly(amide-imide) copolymer according to any of Claims 9-12, wherein both n1 and n2 of Chemical Formula 5 are zero, and both R⁶ and R⁷ are -CF₃, both n3 and n4 are 1, and both n5 and n6 are zero in Chemical Formula 6.

14. An article comprising a poly(amide-imide) copolymer according to any of Claims 1-8;
preferably wherein the article comprises a film, wherein the film has a toughness of greater than or equal to 1,000 Joules × reverse cubic meters × 10⁴ (Joul·m^{-3·}10⁴), and a refractive index of less than or equal to 1.68, when the film has a thickness of 35 micrometers to 100 micrometers.

15. A display device comprising the article according to Claim 14.

## Patentansprüche

1. Polyamidimid-Copolymer, das ein Reaktionsprodukt eines durch die chemische Formel 1 dargestellten Diamins, eines durch die chemische Formel 2 dargestellten Diamins, einer durch die chemische Formel 3 dargestellten Dicarbonylverbindung und eines durch die chemische Formel 4 dargestellten Tetracarbonsäure-Dianhydrids ist: 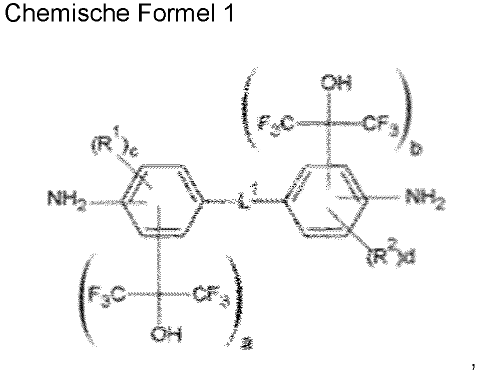 wobei in der chemischen Formel 1 folgendes gilt:
R¹ und R² sind jeweils unabhängig ein Halogenatom,
L¹ ist eine substituierte oder unsubstituierte C1- bis C20-Alkylengruppe, eine substituierte oder unsubstituierte C3- bis C30-Cycloalkylengruppe, -O-, -S-, -C(=O)-, -CH(OH)-, -S(=O)₂-, -Si(CH₃)₂-, -(CF₂)_{q}- mit 1≤q≤10, -C(CH₃)₂-, -C(CF₃)₂-, -C(=O)NH- oder eine Kombination davon,
a und b sind jeweils unabhängig eine ganze Zahl von 0 bis 2, vorausgesetzt 1≤a+b≤4,
c und d sind jeweils unabhängig eine ganze Zahl von 0 bis 2;
Chemische Formel 2 NH₂-A-NH₂,
wobei in der chemischen Formel 2 folgendes gilt:
A ist ein Ringsystem, das zwei oder mehr C6 bis C30 aromatische Ringe umfasst, die durch eine Einzelbindung verknüpft sind, wobei jeder der zwei oder mehr aromatischen Ringe unabhängig unsubstituiert oder substituiert durch eine elektronenziehende Gruppe ist; 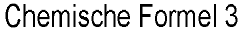 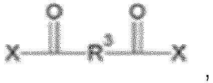 wobei in der chemischen Formel 3 folgendes gilt:
R³ ist eine substituierte oder unsubstituierte Phenylen- oder Biphenylengruppe, und jedes X ist ein identisches oder unterschiedliches Halogenatom; 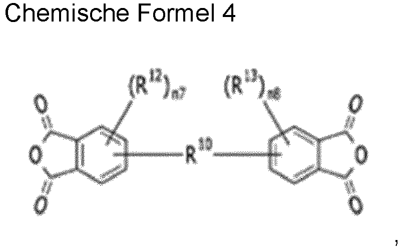 wobei in der chemischen Formel 4 folgendes gilt:
R¹⁰ ist eine Einzelbindung, -O-, -S-, -C(=O)-, -CH(OH)-, -C(=O)NH-, -S(=O)₂-, -Si(CH₃)₂-, -(CH₂)ₚ-, -(CF₂)_{q}-, -C(CₙH₂ₙ₊₁)₂-, -C(CₙF₂ₙ₊₁)₂-, -(CH₂)ₚC(CₙH₂ₙ₊₁)₂(CH₂)_{q}- oder -(CH₂)ₚC(CₙF₂ₙ₊₁)₂(CH₂)_{q}-, mit 1≤n≤10, 1≤p≤10 und 1≤q≤10,
R¹² und R¹³ sind jeweils unabhängig ein Halogen, eine Hydroxygruppe, eine substituierte oder unsubstituierte C1 bis C10 aliphatische organische Gruppe, eine substituierte oder unsubstituierte C6 bis C20 aromatische organische Gruppe, eine Alkoxygruppe der Formel -OR²⁰¹, wobei R²⁰¹ eine C1 bis C10 aliphatische organische Gruppe ist oder eine Silylgruppe der Formel -SiR²¹⁰R²¹¹R²¹², wobei R²¹⁰, R²¹¹ und R²¹² jeweils unabhängig Wasserstoff oder eine C1 bis C10 aliphatische organische Gruppe sind, und
n7 und n8 sind jeweils unabhängig eine ganze Zahl von 0 bis 3.

2. Polyamidimid-Copolymer nach Anspruch 1, wobei in der chemischen Formel 1 L¹ eine C1- bis C20-Alkylengruppe ist, R¹ und R² jeweils unabhängig F oder Cl sind, a und b jeweils 1 sind, und c und d jeweils unabhängig eine ganze Zahl von 0 bis 2 sind; und/oder
wobei in der chemischen Formel 1 L¹ eine Methylengruppe ist, a und b jeweils 1 sind und c und d jeweils 0 sind.

3. Polyamidimid-Copolymer nach Anspruch 1 oder 2, wobei das durch die chemische Formel 2 dargestellte Diamin ein Ringsystem umfasst, das zwei C6 bis C12 aromatische Ringe aufweist, die durch eine Einzelbindung verknüpft sind, wobei jeder der zwei C6 bis C12 aromatischen Ringe unabhängig substituiert ist durch eine elektronenziehende Gruppe, die ausgewählt ist aus einem Halogenatom, einer Nitrogruppe, einer Cyanogruppe, einer C1- oder C2-Haloalkylgruppe, einer C2- bis C6-Alkanoylgruppe oder einer C1- bis C6-Estergruppe;
wobei das durch die chemische Formel 2 dargestellte Diamin vorzugsweise mindestens eines der folgenden umfasst, ausgewählt aus den durch die folgenden chemischen Formeln dargestellten Diaminen: 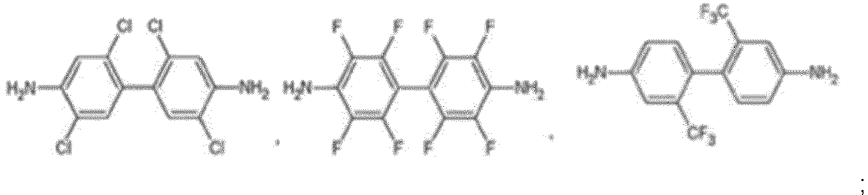 wobei das durch die chemische Formel 2 dargestellte Diamin vorzugsweise ein durch die chemische Formel A dargestelltes Diamin umfasst:

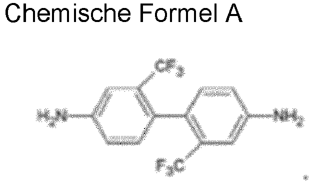

4. Polyamidimid-Copolymer nach einem der Ansprüche 1 bis 3, wobei in der chemischen Formel 3 R³ eine Phenylengruppe ist, und wobei jedes X unabhängig Cl oder Br ist.

5. Polyamidimid-Copolymer nach einem der Ansprüche 1 bis 4, wobei das durch die chemische Formel 4 dargestellte Tetracarbonsäure-Dianhydrid mindestens ein ausgewähltes der folgenden umfasst: 3,3',4,4'-Biphenyl-Tetracarbonsäure-Dianhydrid (BPDA), 3,3',4,4'-Diphenylsulfon-Tetracarbonsäure-Dianhydrid (DSDA), 4,4'-(Hexafluoroisopropyliden)-Diphthalanhydrid (6FDA) und/oder 4,4'-Oxydiphthalanhydrid (ODPA).

6. Polyamidimid-Copolymer nach einem der Ansprüche 1 bis 5, wobei das durch die chemische Formel 4 dargestellte Tetracarbonsäure-Dianhydrid eine Kombination von 3,3',4,4'-Biphenyl-Tetracarbonsäure-Dianhydrid und), 4,4'-(Hexafluoroisopropyliden)-Diphthalanhydrid (6FDA) umfasst.

7. Polyamidimid-Copolymer nach einem der Ansprüche 1 bis 6, wobei eine Menge des durch die chemische Formel 1 dargestellten Diamins geringer ist als 50 Molprozent auf der Basis der Gesamtmenge des durch die chemische Formel 1 dargestellten Diamins und des durch die chemische Formel 2 dargestellten Diamins; und/oder
wobei ein Molverhältnis der durch die chemische Formel 3 dargestellten Dicarbonylverbindung und des durch die chemische Formel 4 dargestellten Tetracarbonsäure-Dianhydrids 30 zu 70 bis 70 zu 30 beträgt.

8. Polyamidimid-Copolymer nach einem der Ansprüche 1 bis 7, wobei die Gesamtmenge des durch die chemische Formel 2 dargestellten Diamins und der durch die chemische Formel 3 dargestellten Dicarbonylverbindung größer oder gleich 50 Molprozent auf der Basis der Gesamtmenge der durch die chemischen Formeln 1 bis 4 dargestellten Verbindungen ist.

9. Zusammensetzung zur Herstellung eines Polyamidimid-Copolymers, umfassend ein durch die chemische Formel 5 dargestelltes Diamin, ein durch die chemische Formel 1 dargestelltes Diamin und ein durch die chemische Formel 4 dargestelltes Tetracarbonsäure-Dianhydrid: 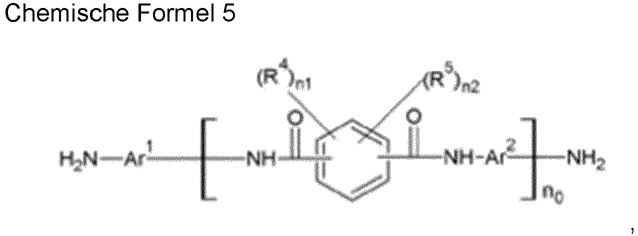 wobei in der chemischen Formel 5 folgendes gilt:
R⁴ und R⁵ sind jeweils unabhängig ein Halogen, eine Hydroxygruppe, eine substituierte oder unsubstituierte C1- bis C10-Alkylgruppe oder eine substituierte oder unsubstituierte C1- bis C10-Alkoxygruppe,
n0 ist eine ganze Zahl größer oder gleich 0,
n1 und n2 sind jeweils unabhängig eine ganze Zahl von 0 bis 4, vorausgesetzt, dass n1 +n2 eine ganze Zahl von 0 bis 4 ist, und
Ar¹ und Ar² sind jeweils unabhängig durch die chemische Formel 6 dargestellt: 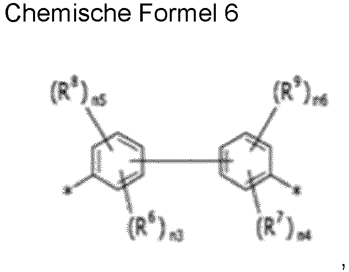
wobei in der chemischen Formel 6 folgendes gilt:
R⁶ und R⁷ sind jeweils unabhängig eine elektronenziehende Gruppe, ausgewählt aus -CF₃, -CCl₃, -CBr₃, -CL₃, -NO₂, -CN, -C(=O)CH₃ und -CO₂C₂H₅,
R⁸ und R⁹ sind jeweils unabhängig ein Halogen, eine Hydroxygruppe, eine substituierte oder unsubstituierte C1 bis C10 aliphatische organische Gruppe, eine substituierte oder unsubstituierte C6 bis C20 aromatische organische Gruppe, eine Alkoxygruppe der Formel -OR²⁰⁴, wobei R²⁰⁴ eine C1 bis C10 aliphatische organische Gruppe ist oder eine Silylgruppe der Formel -SiR²⁰⁵R²⁰⁶R²⁰⁷, wobei R²⁰⁵, R²⁰⁶ und R²⁰⁷ jeweils unabhängig Wasserstoff oder eine C1 bis C10 aliphatische organische Gruppe sind,
n3 ist eine ganze Zahl von 1 bis 4, n5 ist eine ganze von 0 bis 3, vorausgesetzt, dass n3 + n5 eine ganze Zahl von 1 bis 4 ist, und
n4 ist eine ganze Zahl von 1 bis 4, n6 ist eine ganze von 0 bis 3, vorausgesetzt, dass n4 + n6 eine ganze Zahl von 1 bis 4 ist; 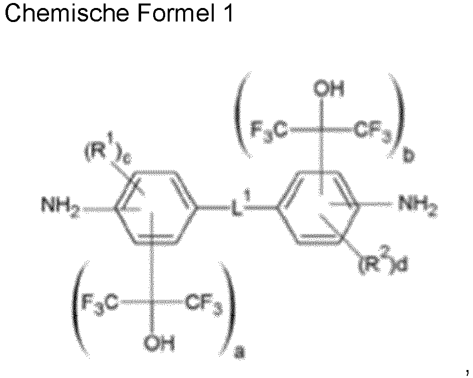
wobei in der chemischen Formel 1 folgendes gilt:
R¹ und R² sind jeweils unabhängig ein Halogenatom,
L¹ ist eine substituierte oder unsubstituierte C1- bis C20-Alkylengruppe, eine substituierte oder unsubstituierte C3- bis C30-Cycloalkylengruppe, -O-, -S-, -C(=O)-, -CH(OH)-, -S(=O)₂-, -Si(CH₃)₂-, -(CF₂)_{q}- mit 1≤q≤10, -C(CH₃)₂-, -C(CF₃)₂-, -C(=O)NH- oder eine Kombination davon,
a und b sind jeweils unabhängig eine ganze Zahl von 0 bis 2, vorausgesetzt 1≤a+b≤4,
c und d sind jeweils unabhängig eine ganze Zahl von 0 bis 2; 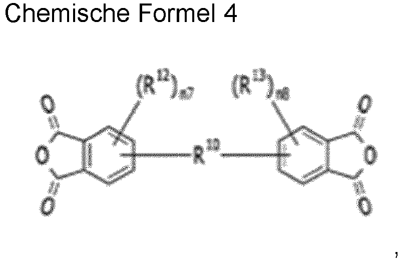
wobei in der chemischen Formel 4 folgendes gilt:
R¹⁰ ist eine Einzelbindung, -O-, -S-, -C(=O)-, -CH(OH)-, -C(=O)NH-, -S(=O)₂-, -Si(CH₃)₂-, -(CH₂)ₚ-, -(CF₂)_{q}-, -C(CnH₂ₙ₊₁)₂-, -C(CₙF₂ₙ₊₁)₂-, -(CH₂)ₚC(CₙH₂ₙ₊₁)₂(CH₂)_{q}- oder -(CH₂)ₚC(CₙF₂ₙ₊₁)₂(CH₂)_{q}-, mit 1≤n≤10, 1≤p≤10 und 1≤q≤10,
R¹² und R¹³ sind jeweils unabhängig ein Halogen, eine Hydroxygruppe, eine substituierte oder unsubstituierte C1 bis C10 aliphatische organische Gruppe, eine substituierte oder unsubstituierte C6 bis C20 aromatische organische Gruppe, eine Alkoxygruppe der Formel -OR²⁰¹, wobei R²⁰¹ eine C1 bis C10 aliphatische organische Gruppe ist oder eine Silylgruppe der Formel -SiR²¹⁰R²¹¹R²¹², wobei R²¹⁰, R²¹¹ und R²¹² jeweils unabhängig Wasserstoff oder eine C1 bis C10 aliphatische organische Gruppe sind, und
n7 und n8 sind jeweils unabhängig eine ganze Zahl von 0 bis 3.

10. Zusammensetzung zur Herstellung eines Polyamidimid-Copolymers nach Anspruch 9, wobei die Zusammensetzung ferner ein durch die chemische Formel 2 dargestelltes Diamin umfasst:
Chemische Formel 2 NH₂-A-NH₂,
wobei in der chemischen Formel 2 folgendes gilt:
A ist ein Ringsystem, das zwei oder mehr C6 bis C30 aromatische Ringe umfasst, die durch eine Einzelbindung verknüpft sind, wobei jeder der zwei oder mehr aromatischen Ringe unabhängig unsubstituiert oder substituiert durch eine elektronenziehende Gruppe ist.

11. Zusammensetzung zur Herstellung eines Polyamidimid-Copolymers nach Anspruch 9 oder 10, wobei in der chemischen Formel 1 L¹ eine C1- bis C20-Alkylengruppe ist, R¹ und R² jeweils unabhängig F oder Cl sind, a und b jeweils 1 sind, und c und d jeweils unabhängig eine ganze Zahl von 0 bis 2 sind.

12. Zusammensetzung zur Herstellung eines Polyamidimid-Copolymers nach einem der Ansprüche 9 bis 11, wobei das durch die chemische Formel 4 dargestellte Tetracarbonsäure-Dianhydrid eine Kombination der durch die chemische Formel 4-1 dargestellten Verbindung und der durch die chemische Formel 4-2 dargestellten Verbindung ist:

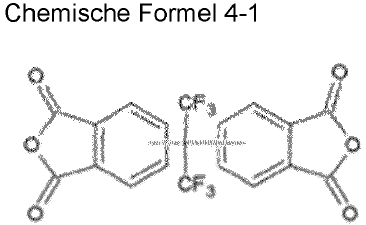

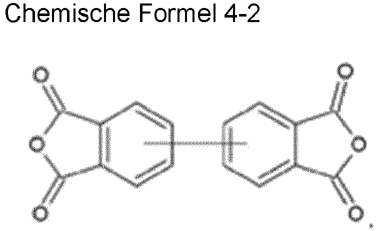

13. Zusammensetzung zur Herstellung eines Polyamidimid-Copolymers nach einem der Ansprüche 9 bis 12, wobei in der chemischen Formel 5 n1 und n2 jeweils Null sind, und wobei in der chemischen Formel 6 R⁶ und R⁷ jeweils -CF₃ sind, n3 und n4 jeweils 1 sind und n5 und n6 jeweils Null sind.

14. Artikel, der ein Polyamidimid-Copolymer nach einem der Ansprüche 1 bis 8 umfasst;
wobei der Artikel einen Film umfasst, wobei der Film eine Zähigkeit von größer oder gleich 1.000 Joule x 1/Kubikmeter x 10⁴ (Joul·m⁻³·10⁴), und einen Brechungsindex von kleiner oder gleich 1,68, wenn der Film eine Dicke von 35 Mikrometern bis 100 Mikrometern aufweist.

15. Displayvorrichtung, die den Artikel nach Anspruch 14 umfasst.

## Revendications

1. Copolymère poly(amide-imide) qui est un produit réactionnel d'une diamine représentée par la formule chimique 1, d'une diamine représentée par la formule chimique 2, d'un composé dicarbonyle représenté par la formule chimique 3 et d'un dianhydride d'acide tétracarboxylique représenté par la formule chimique 4 : 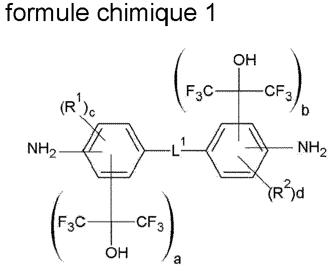 dans la formule chimique 1,
R¹ et R² sont chacun indépendamment un atome d'halogène,
L¹ est un groupe alkylène en C1 à C20 substitué ou non substitué, un groupe cycloalkylène en C3 à C30 substitué ou non substitué, -O-, -S-, -C(=O)-, -CH(OH)-, -S(=O)₂-, -Si(CH₃)₂-, -(CF₂)_{q}-, où 1≤q≤10, -C(CH₃)₂-, -C(CF₃)₂-, -C(=O)NH-, ou une combinaison de ceux-ci,
a et b sont chacun indépendamment un entier compris entre 0 et 2, sous réserve que 1≤a+b≤4,
c et d sont chacun indépendamment un entier compris entre 0 et 2 ;
formule chimique 2 NH₂-A-NH₂
dans la formule chimique 2,
A est un système cyclique comprenant au moins deux cycles aromatiques en C6 à C30 reliés par une liaison simple, chacun des au moins deux cycles aromatiques étant indépendamment non substitué ou substitué par un groupe attracteur d'électrons ; 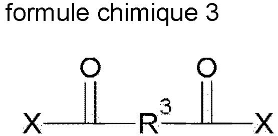 dans la formule chimique 3,
R³ est un groupe phénylène ou biphénylène substitué ou non substitué, et chaque X est un atome d'halogène identique ou différent ; 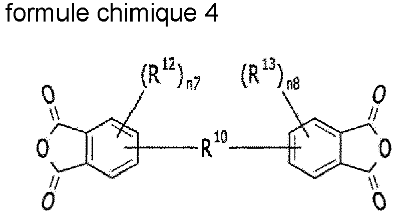 dans la formule chimique 4,
R¹⁰ est une liaison simple, -O-, -S-, -C(=O)-, -CH(OH)-, -C(=O)NH-, -S(=O)₂-, -Si(CH₃)₂-, -(CH₂)ₚ-, -(CF₂)_{q}-, -C(CnH₂ₙ₊₁)₂-, -C(CₙF₂ₙ₊₁)₂-, -(CH₂)ₚC(CₙH₂ₙ₊₁)₂(CH₂)_{q}-, ou -(CH₂)ₚC(CₙF₂ₙ₊₁)₂(CH₂)_{q}-, où 1≤n≤10, 1≤p≤10, et 1≤q≤10,
R¹² et R¹³ sont chacun indépendamment un halogène, un groupe hydroxy, un groupe organique aliphatique en C1 à C10 substitué ou non substitué, un groupe organique aromatique en C6 à C20 substitué ou non substitué, un groupe alcoxy de formule -OR²⁰¹, R²⁰¹ étant un groupe organique aliphatique en C1 à C10, ou un groupe silyle de formule -SiR²¹⁰R²¹¹R²¹², R²¹⁰, R²¹¹, et R²¹² étant chacun indépendamment un hydrogène ou un groupe organique aliphatique en C1 à C10, et
n7 et n8 sont chacun indépendamment un entier compris entre 0 et 3.

2. Copolymère poly(amide-imide) selon la revendication 1, dans la formule chimique 1, L¹ est un groupe alkylène en C1 à C20, R¹ et R² sont chacun indépendamment F ou Cl, a et b sont tous deux égaux à 1, et c et d sont chacun indépendamment un nombre entier comprise entre 0 et 2 ; et/ou
dans la formule chimique 1, L¹ est un groupe méthylène, a et b sont tous deux 1, et c et d sont tous deux 0.

3. Copolymère poly(amide-imide) selon la revendication 1 ou 2, la diamine représentée par la formule chimique 2 comprenant un système cyclique comprenant deux cycles aromatiques en C6 à C12 liés par une liaison simple, chacun des deux cycles aromatiques en C6 à C12 étant indépendamment substitué par un groupe attracteur d'électrons choisi parmi un atome d'halogène, un groupe nitro, un groupe cyano, un groupe haloalkyle en C1 ou C2, un groupe alcanoyle en C2 à C6, ou un groupe ester en C1 à C6 ;
de préférence la diamine représentée par la formule chimique 2 comprenant au moins une diamine choisie parmi les diamines représentées par les formules chimiques suivantes : 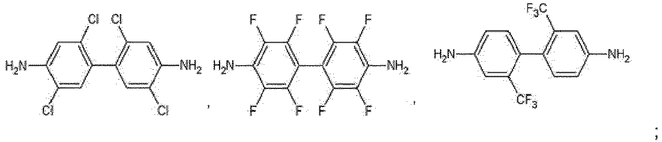 de préférence la diamine représentée par la formule chimique 2 comprenant une diamine représentée par la formule chimique A :

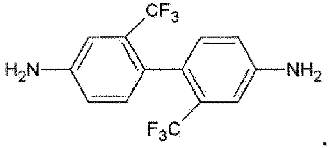

4. Copolymère poly(amide-imide) selon l'une quelconque des revendications 1 à 3, dans la formule chimique 3, R³ est un groupe phénylène, et chaque X est indépendamment Cl ou Br.

5. Copolymère poly(amide-imide) selon l'une quelconque des revendications 1 à 4, le dianhydride d'acide tétracarboxylique représenté par la formule chimique 4 comprenant au moins un élément choisi parmi 3,3',4,4'-biphényl tétracarboxylique dianhydride (BPDA), 3,3',4,4'-diphénylsulfone tétracarboxylique dianhydride (DSDA), 4,4'-(héxafluoroisopropylidène)diphthalique anhydride (6FDA) et 4,4'-oxydiphthalique anhydride (ODPA).

6. Copolymère poly(amide-imide) selon l'une quelconque des revendications 1 à 5, le dianhydride d'acide tétracarboxylique représenté par la formule chimique 4 comprenant une combinaison de 3,3',4,4'-biphényl tétracarboxylique dianhydride et de 4,4'-(héxafluoroisopropylidène)diphthalique anhydride.

7. Copolymère poly(amide-imide) selon l'une quelconque des revendications 1 à 6, une quantité de la diamine représentée par la formule chimique 1 étant inférieure à 50 % en moles par rapport à la quantité totale de la diamine représentée par la formule chimique 1 et de la diamine représentée par la formule chimique 2 , et/ou
un rapport molaire du composé dicarbonyle représenté par la formule chimique 3 et du dianhydride d'acide tétracarboxylique représenté par la formule chimique 4 étant de 30 à 70 : 70 à 30.

8. Copolymère poly(amide-imide) selon l'une quelconque des revendications 1 à 7, la quantité totale de la diamine représentée par la formule chimique 2 et du composé dicarbonyle représenté par la formule chimique 3 étant égale ou supérieure à 50 % en moles en fonction de la quantité totale des composés représentés par les formules chimiques 1 à 4.

9. Composition pour préparer un copolymère poly(amide-imide) comprenant une diamine représentée par la formule chimique 5, une diamine représentée par la formule chimique 1, et un dianhydride d'acide tétracarboxylique représenté par la formule chimique 4 : 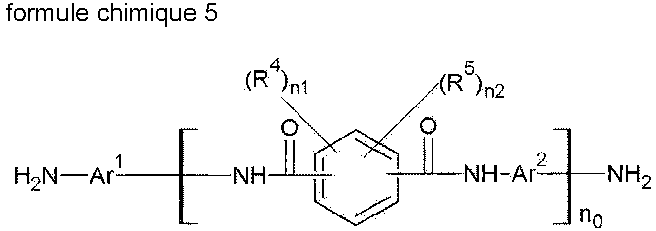 dans la formule chimique 5,
R⁴ et R⁵ sont chacun indépendamment un halogène, un groupe hydroxy, un groupe alkyle en C1 à C10 substitué ou non substitué, ou un groupe alcoxy en C1 à C10 substitué ou non substitué.
n0 est un entier supérieur ou égal à 0,
n1 et n2 sont chacun indépendamment un entier compris entre 0 et 4, sous réserve que n1 + n2 soit un entier compris entre 0 et 4, et
Ar¹ et Ar² sont chacun représentés indépendamment par la formule chimique 6 : 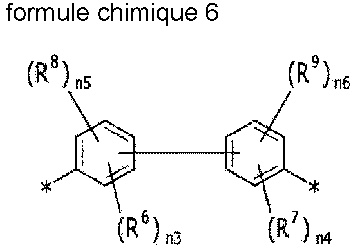
dans la formule chimique 6,
R⁶ et R⁷ sont chacun indépendamment un groupe attracteur d'électrons choisi parmi - CF₃, -CCl₃, -CBr₃, -Cl₃, -NO₂, -CN, -C(=O)CH₃, et -CO₂C₂H₅,
R⁸ et R⁹ sont chacun indépendamment un halogène, un groupe hydroxy, un groupe organique aliphatique en C1 à C10 substitué ou non substitué, un groupe organique aromatique en C6 à C20 substitué ou non substitué, un groupe alcoxy de formule -OR²⁰⁴, R²⁰⁴ étant un groupe organique aliphatique en C1 à C10, ou un groupe silyle de formule -SiR²⁰⁵R²⁰⁶R²⁰⁷, R²⁰⁵, R²⁰⁶, et R²⁰⁷ étant chacun indépendamment un hydrogène ou un groupe organique aliphatique en C1 à C10,
n3 est un nombre entier compris entre 1 et 4, n5 est un nombre entier compris entre 0 et 3, sous réserve que n3 + n5 soit un nombre entier compris entre 1 et 4, et
n4 est un entier compris entre 1 et 4, n6 est un entier compris entre 0 et 4, sous réserve que n4+ n6 soit un entier compris entre 1 et 4 ; 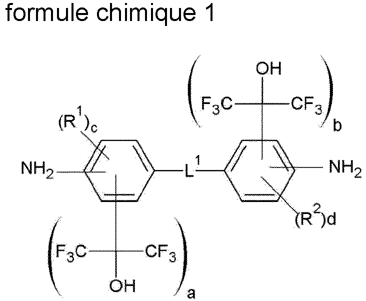
dans la formule chimique 1,
R¹ et R² sont chacun indépendamment un atome d'halogène,
L¹ est un groupe alkylène en C1 à C20 substitué ou non substitué, un groupe cycloalkylène en C3 à C30 substitué ou non substitué, -O-, -S-, -C(=O)-, -CH(OH)-,-S(=O)₂-, -Si(CH₃)₂-, -(CF₂)_{q}-, où 1≤q≤10, -C(CH₃)₂-, -C(CF₃)₂-, -C(=O)NH-, ou une combinaison de ceux-ci,
a et b sont chacun indépendamment un entier compris entre 0 et 2, sous réserve que 1≤a+b≤4,
c et d sont chacun indépendamment un entier compris entre 0 et 2 ; 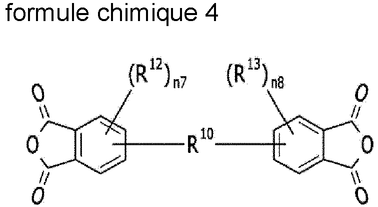
dans la formule chimique 4,
R¹⁰ est une liaison simple, -O-, -S-, -C(=O)-, -CH(OH)-, -C(=O)NH-, -S(=O)₂-,-Si(CH₃)₂-, -(CH₂)ₚ-, -(CF₂)_{q}-, -C(CnH₂ₙ₊₁)₂-, -C(CₙF₂ₙ₊₁)₂-, -(CH₂)ₚC(CₙH₂ₙ₊₁)₂(CH₂)_{q}-, ou-(CH₂)ₚC(CₙF₂ₙ₊₁)₂(CH₂)_{q}-, où 1≤n≤10, 1≤p≤10, et 1≤q≤10,
R¹² et R¹³ sont chacun indépendamment un halogène, un groupe hydroxy, un groupe organique aliphatique en C1 à C10 substitué ou non substitué, un groupe organique aromatique en C6 à C20 substitué ou non substitué, un groupe alcoxy de formule -OR²⁰¹, R²⁰¹ étant un groupe organique aliphatique en C1 à C10, ou un groupe silyle de formule -SiR²¹⁰R²¹¹R²¹², R10, R²¹¹, et R²¹² étant chacun indépendamment un hydrogène ou un groupe organique aliphatique en C1 à C10, et
n7 et n8 sont chacun indépendamment un entier compris entre 0 et 3.

10. Composition pour préparer un copolymère poly(amide-imide) selon la revendication 9, la composition comprenant en outre une diamine représentée par la formule chimique 2 :
formule chimique 2 NH₂-A-NH₂
dans la formule chimique 2,
A est un système cyclique comprenant au moins deux cycles aromatiques en C6 à C30 reliés par une liaison simple, chacun des au moins deux cycles aromatiques étant indépendamment non substitué ou substitué par un groupe attracteur d'électrons.

11. Composition pour préparer un copolymère poly(amide-imide) selon la revendication 9 ou 10, dans la formule chimique 1, L¹ est un groupe alkylène en C1 à C20, R¹ et R² sont chacun indépendamment F ou Cl, a et b sont tous deux 1, et c et d sont chacun indépendamment un nombre entier comprise entre 0 et 2.

12. Composition pour préparer un copolymère poly(amide-imide) selon l'une quelconque des revendications 9 à 11, le dianhydride d'acide tétracarboxylique représenté par la formule chimique 4 comprenant une combinaison du composé représenté par la formule chimique 4-1, et du composé représenté par la formule chimique 4-2 :

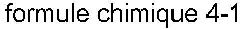

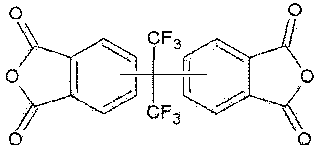

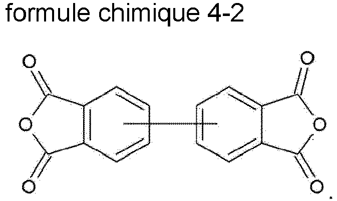

13. Composition pour préparer un copolymère poly(amide-imide) selon l'une quelconque des revendications 9 à 12, n1 et n2 de la formule chimique 5 étant tous deux zéro, et R⁶ et R⁷ étant tous deux -CF₃, n3 et n4 étant tous deux 1, et n5 et n6 sont tous deux zéro dans la formule chimique 6.

14. Article comprenant un copolymère poly(amide-imide) selon l'une quelconque des revendications 1 à 8 ;
de préférence l'article comprenant un film, le film ayant une ténacité supérieure ou égale à 1 000 joules x mètres cubes inversés x 10⁴ (Joul·m⁻³10⁴), et un indice de réfraction inférieur ou égal à 1,68, lorsque le film a une épaisseur de 35 à 100 micromètres.

15. Dispositif d'affichage comprenant l'article selon la revendication 14.
